# EUROPEAN PATENT APPLICATION

(11) **EP 4 679 592 A1**
(43) Date of publication of application: **14.01.2026**
(21) Application number: 24806054.3
(22) Date of filing: 08.01.2024
(51) Int. Cl.: H01M 50/209

(54) **BATTERY AND ELECTRIC DEVICE**

(30) Priority: 16.05.2023 CN 202310548509
(71) Applicant: Contemporary Amperex Technology Co., Limited, Ningde, Fujian 352100 (CN)
(72) Inventor: LIN, Chenhui, Ningde, Fujian 352100 (CN); HE, Jianfu, Ningde, Fujian 352100 (CN); YE, Yonghuang, Ningde, Fujian 352100 (CN)
(74) Representative: Kraus & Lederer PartGmbB
(86) International application number: PCT/CN2024/071156
(87) International publication number: WO 2024/234690

(57) **Abstract**

The present application discloses a battery and an electric apparatus. The battery includes: a first battery cell assembly, the first battery cell assembly including at least one first battery cell, the first battery cell being internally provided with a first elastic buffer pad; a second battery cell assembly, the second battery cell assembly including at least two second battery cells, the at least two second battery cells being disposed on both sides of the first battery cell assembly along a thickness direction of the first battery cell assembly, where the thickness direction of the first battery cell assembly is consistent with a thickness direction of the first battery cell.

## Description

### TECHNICAL FIELD

The present application relates to the field of battery technology, and more particularly, to a battery and an electric apparatus.

### BACKGROUND

Lithium-ion batteries are characterized by being green, environmentally friendly, high-energy, and low-carbon. They are not only applied in energy storage power systems such as hydroelectric, thermal, wind, and solar power plants but are also widely used in electric vehicles such as electric bicycles, electric motorcycles, and electric cars, as well as in military equipment, aerospace, and various other fields. With the development of modern society, the requirements for lithium-ion batteries are increasingly stringent.

### DISCLOSURE

In view of the technical problems existing in the background, the present application provides a battery aimed at reducing the expansion force of battery cells located in the middle of the battery, thereby suppressing the issue of stress concentration in the middle battery cells caused by cell expansion during cycling, which may lead to lithium precipitation and capacity plunge.

To achieve the above objective, a first aspect of the present application provides a battery, including:
a first battery cell assembly, the first battery cell assembly including at least one first battery cell, and the first battery cell being internally provided with a first elastic buffer pad; and
a second battery cell assembly, the second battery cell assembly including at least two second battery cells, the at least two second battery cells being disposed on both sides of the first battery cell assembly along a thickness direction of the first battery cell assembly, where the thickness direction of the first battery cell assembly is consistent with a thickness direction of the first battery cell.

The battery of the first aspect of the present application has at least the following beneficial effects: In the thickness direction of the battery cells, the battery cells located in the middle of the battery are typically the parts that experience the most severe expansion and the greatest expansion force during use. By incorporating a first elastic buffer pad in the first battery cells located in the middle along the thickness direction of the first battery cell assembly, while not providing elastic buffer pads in the second battery cells located on both sides of the first battery cell assembly in the thickness direction, it is not only conducive to absorbing the volume expansion of the battery cells with relatively more severe expansion in the battery, reducing the expansion force of the battery cells in the middle of the battery, and improving the volume stability of the battery, but also helps to alleviate the issue of stress concentration in the middle battery cells caused by volume expansion of the battery cells in the later stages of battery use, which may lead to lithium precipitation and capacity plunge in the middle battery cells. At the same time, it can also balance the high energy density of the battery.

In some embodiments of the present application, with a length direction of the first battery cell assembly as a row and the thickness direction of the first battery cell assembly as a column, the battery satisfies at least one of the following two conditions: the first battery cell assembly includes a plurality of the first battery cells arranged in rows and/or columns; and the first battery cell assembly is independently provided with a plurality of the second battery cells arranged in rows and/or columns on both sides along the thickness direction of the first battery cell assembly.

In some embodiments of the present application, the at least two second battery cells are symmetrically arranged on both sides of the first battery cell assembly along the thickness direction of the first battery cell assembly. Controlling this arrangement is conducive to improving the overall structural stability of the battery.

In some embodiments of the present application, based on a total number of the first battery cells and the second battery cells, a proportion of the number of the first battery cells is 30% to 70%. Satisfying this condition is conducive to alleviating the volume expansion of the battery cells, reducing the probability of stress concentration in the battery cells located in the middle of the battery due to large expansion forces, which may lead to lithium precipitation and capacity plunge, while also balancing the high energy density of the battery.

In some embodiments of the present application, the first battery cell includes a housing, at least one electrode assembly, and at least one first elastic buffer pad, the electrode assembly being disposed within the housing, and in a thickness direction of the electrode assembly, the first elastic buffer pad being disposed between the electrode assembly and the housing, and/or between two adjacent electrode assemblies. Satisfying this condition is conducive to suppressing the volume expansion of the first battery cell, improving its volume stability.

In some embodiments of the present application, the first elastic buffer pad includes an elastic buffer layer and a support layer disposed on at least one side of the elastic buffer layer, the support layer being configured to support the elastic buffer layer. Using the support layer to support the elastic buffer layer can suppress thermal shrinkage of the elastic buffer layer during a vacuum baking process, for example, limiting its thermal shrinkage in a two-dimensional direction perpendicular to its thickness direction, alleviating the issue of losing its original function due to thermal shrinkage, while also alleviating the issue of material damage due to mechanical stress in the later stages of battery use.

In some embodiments of the present application, under a same pressure, a compression rate of the elastic buffer layer is greater than a compression rate of the support layer. This allows the elastic buffer layer to primarily mitigate volume changes of the battery cell, while enabling the support layer to provide good support to the elastic buffer layer.

In some embodiments of the present application, a porosity of the elastic buffer layer is greater than a porosity of the support layer. This, on one hand, enables the support layer to have a smaller compression rate than the elastic buffer layer under the same pressure conditions, providing good support to the elastic buffer layer, and on the other hand, can limit excessive embedding of the elastic buffer layer into the pore structure of the support layer, which is conducive to maintaining the structural stability of the first elastic buffer pad.

In some embodiments of the present application, an elastic modulus of the elastic buffer layer is less than an elastic modulus of the support layer. This enables the support layer to have relatively good rigidity, thereby providing good support to the elastic buffer layer, facilitating the suppression of thermal shrinkage of the elastic buffer layer during the vacuum baking process, alleviating the issue of losing its original function due to thermal shrinkage, and alleviating the issue of material damage due to mechanical stress in the later stages of battery use.

In some embodiments of the present application, the compression rate of the elastic buffer layer under 1 MPa pressure is 50% to 90%, optionally 60% to 80%, and the compression rate of the support layer under 1 MPa pressure is less than or equal to 5%. Satisfying the given conditions enables the elastic buffer layer to effectively suppress volume changes of the first battery cell, while allowing the support layer to provide good support to the elastic buffer layer.

In some embodiments of the present application, the compression rate of the elastic buffer layer under 3 MPa pressure is 60% to 95%, optionally 80% to 95%, and the compression rate of the support layer under 3 MPa pressure is less than or equal to 8%. Satisfying the given conditions enables the elastic buffer layer to effectively suppress volume changes of the first battery cell, while allowing the support layer to provide good support to the elastic buffer layer.

In some embodiments of the present application, the porosity of the elastic buffer layer is 40% to 95%, optionally 55% to 90%, and further optionally 70% to 85%. Controlling the porosity of the elastic buffer layer within the given range enables the elastic buffer layer to have good compressibility and resilience, effectively suppressing volume changes of the first battery cell.

In some embodiments of the present application, the porosity of the support layer is less than or equal to 5%. Controlling the porosity of the support layer within the given range is not only conducive to providing good support to the elastic buffer layer but also limits excessive embedding of the elastic buffer layer into the support layer, which is conducive to maintaining the structural stability of the first elastic buffer pad.

In some embodiments of the present application, the elastic buffer layer includes at least one of foamed polyethylene, polypropylene, polyurethane, or silicone rubber; and/or, the support layer includes at least one of high-density polyethylene, polymethyl methacrylate, polyethylene terephthalate, or polytetrafluoroethylene.

In some embodiments of the present application, in the first battery cell, at least one first elastic buffer pad includes one elastic buffer layer and one support layer. Controlling the first elastic buffer pad to have this structure enables the first elastic buffer pad to have good compressibility and resilience in its thickness direction, effectively suppressing volume changes of the first battery cell, and is also conducive to reducing the thickness of the first elastic buffer pad, reducing its potential negative impact on the energy density of the first battery cell.

In some embodiments of the present application, in the first battery cell, at least one first elastic buffer pad includes one elastic buffer layer and two support layers, the elastic buffer layer being sandwiched between the two support layers. Controlling the elastic buffer pad to have this structure enables the first elastic buffer pad to have good compressibility and resilience in its thickness direction, effectively suppressing volume changes of the first battery cell, and further improves the issue of the elastic buffer layer losing its original function due to thermal shrinkage during the vacuum baking process and the issue of material damage of the buffer pad due to mechanical stress in the later stages of battery use.

In some embodiments of the present application, a free thickness of the elastic buffer layer is greater than a thickness of the support layer. This balances the compressible deformation amount of the first elastic buffer pad and the overall thickness of the first elastic buffer pad, which is conducive to maintaining the volume stability of the first battery cell, reducing the volume expansion and expansion force of the first battery cell during battery use, while also reducing the potential negative impact of the elastic buffer pad on the energy density of the battery cell.

In some embodiments of the present application, in a single first elastic buffer pad, a ratio of a total thickness of the support layer to the free thickness of the elastic buffer layer is 0.005 to 0.1, optionally 0.02 to 0.05. This enables the support layer to provide good support to the elastic buffer layer, while balancing the compressible deformation amount of the first elastic buffer pad and the overall thickness of the first elastic buffer pad, which is conducive to maintaining the volume stability of the first battery cell, reducing the volume expansion and expansion force of the first battery cell during battery use, and reducing the potential negative impact of the first elastic buffer pad on the energy density of the first battery cell.

In some embodiments of the present application, the free thickness of the elastic buffer layer is 0.2 mm to 10 mm, and a thickness of a single support layer is 30 µm to 200 µm. This enables the support layer to provide good support to the elastic buffer layer, while balancing the compressible deformation amount of the first elastic buffer pad and the overall thickness of the first elastic buffer pad, which is conducive to maintaining the volume stability of the first battery cell, reducing the volume expansion and expansion force of the first battery cell during battery use, and reducing the potential negative impact of the elastic buffer pad on the energy density of the battery cell.

In some embodiments of the present application, a free thickness of a single first elastic buffer pad is 2% to 15% of a thickness of a single electrode assembly, optionally 5% to 10% of the thickness of the single electrode assembly. This balances the compressible deformation amount of the first elastic buffer pad and the overall thickness of the first elastic buffer pad, which is conducive to maintaining the volume stability of the first battery cell, reducing the volume expansion and expansion force of the first battery cell during battery use, and reducing the potential negative impact of the elastic buffer pad on the energy density of the battery cell.

In some embodiments of the present application, in the first battery cell, a sum of thicknesses of all the electrode assemblies and free thicknesses of all the first elastic buffer pads is 96% to 105% of a thickness of an inner cavity of the housing, optionally 98% to 103% of the thickness of the inner cavity of the housing. This reduces the difficulty of inserting the electrode assemblies and the first elastic buffer pads into the housing, while balancing the high energy density of the first battery cell and the stability of the electrode assemblies within the housing.

In some embodiments of the present application, the elastic buffer layer is adhesively connected to the support layer. This provides good support and fixation to the elastic buffer layer.

In some embodiments of the present application, an interlayer peel strength between the elastic buffer layer and the support layer is greater than or equal to 10 N/15 mm, optionally greater than or equal to 20 N/15 mm. Satisfying this condition further enables the support layer to provide good support to the elastic buffer layer, which is conducive to suppressing thermal shrinkage of the elastic buffer layer during the vacuum baking process, alleviating the issue of losing its original function due to thermal shrinkage, while also alleviating the issue of material damage of the buffer pad due to mechanical stress in the later stages of battery use.

In some embodiments of the present application, a tensile strength of the support layer is greater than or equal to 20 MPa, optionally greater than or equal to 50 MPa. This further enables the support layer to provide good support to the elastic buffer layer.

In some embodiments of the present application, in the first elastic buffer pad disposed between the electrode assembly and the housing, a thermal conductivity of the elastic buffer layer and/or the support layer is greater than or equal to 10 W/(m·°C), optionally greater than or equal to 20 W/(m·°C). Satisfying this condition can increase the thermal conductivity of the buffer pad, reducing heat accumulation inside the battery cell.

In some embodiments of the present application, in the first elastic buffer pad disposed between two adjacent electrode assemblies, the thermal conductivity of the elastic buffer layer and/or the support layer is less than or equal to 0.1 W/(m·°C), optionally less than or equal to 0.05 W/(m·°C). Satisfying this condition can enhance the thermal insulation capability of the buffer pad, preventing the failure of one electrode assembly from causing the failure of other electrode assemblies.

In some embodiments of the present application, the first elastic buffer pad is disposed between two adjacent electrode assemblies. This not only prevents the electrode plates in the central region of two adjacent electrode assemblies from being subjected to significant compression, avoiding lithium precipitation issues and battery performance degradation caused thereby, but also facilitates contact between the electrode assembly of a cell and the housing, enhancing the heat dissipation capability of the battery cell.

In some embodiments of the present application, in the thickness direction of the first battery cell assembly, free thicknesses of the first elastic buffer pads in different first battery cells gradually decrease from the middle of the first battery cell assembly toward both sides. This can maintain the volume stability of the first battery cell and the battery, reducing the volume expansion and expansion force of the first battery cell during battery use, while further balancing the high energy density of the battery.

In some embodiments of the present application, in the thickness direction of the first battery cell assembly, among two adjacent first battery cells, the free thickness of the first elastic buffer pad in the first battery cell closer to the second battery cell is 80% to 100% of the free thickness of the first elastic buffer pad in the first battery cell farther from the second battery cell, optionally 90% to 95%. This is conducive to maintaining the volume stability of the first battery cell and the battery, reducing the volume expansion and expansion force of the first battery cell during battery use, while further balancing the high energy density of the battery.

In some embodiments of the present application, a difference between a thickness of the first battery cell and a thickness of the second battery cell is less than or equal to a sum of free thicknesses of all the first elastic buffer pads in a single first battery cell. Satisfying this condition can further improve the stability of the battery while balancing the high energy density of the battery.

In some embodiments of the present application, in the thickness direction of the first battery cell assembly, at least one of the following is provided with a second elastic buffer pad and/or a thermal insulation pad: between two adjacent first battery cells, between two adjacent second battery cells, or between the first battery cell and the second battery cell. Providing the second elastic buffer pad is conducive to further reducing the expansion force of the battery cells in the middle of the battery, improving the volume stability of the battery, and alleviating the issue of stress concentration in the middle battery cells caused by volume expansion of the battery cells in the later stages of battery use, which may lead to lithium precipitation and capacity plunge in the middle battery cells; and providing the thermal insulation pad is conducive to reducing the probability of simultaneous failure of multiple battery cells in the battery.

In some embodiments of the present application, in the thickness direction of the first battery cell assembly, a free thickness of the second elastic buffer pad gradually decreases from the middle of the first battery cell assembly toward both sides. Satisfying the given condition can balance the energy density of the battery while maintaining the volume stability of each battery cell and the battery.

In some embodiments of the present application, in the thickness direction of the first battery cell assembly, at least one of the following is provided with two layers of the second elastic buffer pad and one layer of the thermal insulation pad, the thermal insulation pad being sandwiched between the two layers of the second elastic buffer pad: between two adjacent first battery cells, between two adjacent second battery cells, or between the first battery cell and the second battery cell.

**In** some embodiments of the present application, the second elastic buffer pad is the same as the first elastic buffer pad.

**In** some embodiments of the present application, in the thickness direction of the first battery cell assembly, among two adjacent second elastic buffer pads, the free thickness of the second elastic buffer pad farther from the first battery cell is 80% to 100% of the free thickness of the second elastic buffer pad closer to the first battery cell, optionally 90% to 95%. Satisfying the given condition can reduce the risk of individual elastic buffer pads being unable to sufficiently suppress the volume expansion of the battery cell, while also reducing the potential negative impact of the second elastic buffer pad on the energy density of the battery.

A second aspect of the present application provides an electric apparatus, including: the battery according to the first aspect of the present application.

### BRIEF DESCRIPTION OF DRAWINGS

The above and/or additional aspects and advantages of the present application will become apparent and readily understood from the description of embodiments in conjunction with the following drawings, where:
FIG. 1 is a schematic structural diagram of a battery as a battery pack according to an embodiment of the present application.
FIG. 2 is a schematic structural diagram of arrangement of battery cells in a battery according to an embodiment of the present application.
FIG. 3 is a schematic structural diagram of a first battery cell according to an embodiment of the present application.
FIG. 4 is a schematic structural diagram of a first battery cell according to another embodiment of the present application.
FIG. 5 is a schematic structural diagram of a first elastic buffer pad according to an embodiment of the present application.
FIG. 6 is a schematic structural diagram of a first elastic buffer pad according to another embodiment of the present application.
FIG. 7 is an exploded view of a battery pack according to an embodiment of the present application.
FIG. 8 is a schematic diagram of an embodiment of an electric apparatus using a battery as a power source according to an embodiment of the present application.

### Reference signs:

1-first battery cell assembly; 2-second battery cell assembly; 3-battery; 4-upper case; 5-lower case; 10-first battery cell; 20-second battery cell; 110-housing; 120-electrode assembly; 130-first elastic buffer pad; 131-elastic buffer layer; and 132-support layer.

### DESCRIPTION OF EMBODIMENTS

The present application is further described below in conjunction with specific embodiments. It should be understood that these specific embodiments are merely used to illustrate the present application and are not intended to limit the scope of the present application.

The term "embodiment" mentioned in the present application means that a particular feature, structure, or characteristic described in connection with the embodiment may be included in at least one embodiment of the present application. The appearance of this term in various places in the specification does not necessarily refer to the same embodiment, nor is it an independent or alternative embodiment mutually exclusive with other embodiments. Those skilled in the art explicitly and implicitly understand that the embodiments described in the present application may be combined with other embodiments.

The "ranges" disclosed in the present application are defined in the form of lower limits and/or upper limits, and a given range is defined by selecting a lower limit and/or an upper limit, with the selected lower limit and/or upper limit defining the boundaries of a particular range. A range defined in this manner may include or exclude the endpoints and may be arbitrarily combined, that is, any lower limit may be combined with any upper limit to form a range not explicitly described, and any lower limit may be combined with other lower limits to form a range not explicitly described, and similarly, any upper limit may be combined with any other upper limit to form a range not explicitly described. In addition, each individually disclosed point or single numerical value may itself serve as a lower limit or upper limit to be combined with any other point or single numerical value or with other lower limits or upper limits to form a range not explicitly described.

Unless otherwise specified, all embodiments and optional embodiments of the present application may be combined with each other to form new technical solutions, and such technical solutions should be considered included in the disclosure of the present application.

Unless otherwise specified, all technical features and optional technical features of the present application may be combined with each other to form new technical solutions, and such technical solutions should be considered included in the disclosure of the present application.

Unless otherwise specified, the terms "include" and "comprise" mentioned in the present application indicate an open-ended inclusion, but may also indicate a closed-ended inclusion. For example, "include" and "comprise" may mean that other components not listed may also be included or included, or only the listed components may be included or included. Additionally, in the present application, the terms "plurality" and "multiple" refer to two or more.

Unless otherwise specified, in the present application, the term "and/or" merely describes an association relationship between associated objects, indicating that three relationships may exist, for example, A and/or B may indicate: A exists alone, A and B exist simultaneously, and B exists alone. Additionally, the character "/" in this document generally indicates an "or" relationship between the associated objects.

Unless otherwise defined, all technical and scientific terms used in the present application have the same meanings as commonly understood by those skilled in the technical field of the present application; the terms used in the present application are for the purpose of describing specific embodiments only and are not intended to limit the present application; the terms "include" and "have" in the specification and claims of the present application, as well as any variations thereof, are intended to cover non-exclusive inclusion. Unless otherwise specified, the terms used in the present application have the commonly understood meanings in the art. Unless otherwise specified, the numerical values of parameters mentioned in the present application may be measured using various measurement methods commonly used in the art (for example, they may be tested according to the methods provided in the embodiments of the present application).

With the rapid development of new energy, the application of lithium-ion batteries has become increasingly widespread. Lithium-ion batteries undergo volume changes during charge-discharge cycles, overcharging, and other processes, and as the operating duration increases, the expansion amount gradually increases. Taking a battery pack as an example, during cycling, the battery cells become thicker due to expansion, and the expansion force increases, particularly causing stress concentration in the battery cells in the middle of the battery pack, leading to lithium precipitation and capacity plunge in the middle battery cells.

To mitigate the above issues, technical measures adopted in related fields include, but are not limited to, the selection of negative electrode active materials or the structure of the active material layer of the electrode plate, and the selection of the electrolyte supply form. In the present application, by providing first battery cells with built-in elastic buffer pads in the middle of the battery along the thickness direction of the electrode cells to form a first battery cell assembly, and providing second battery cells without elastic buffer pads on both sides of the battery (that is, on both sides of the first battery cell assembly in the thickness direction), it is not only conducive to absorbing the volume expansion of the battery cells with relatively more severe expansion and greater expansion force in the battery, reducing the expansion force of the battery cells in the middle of the battery, and improving the volume stability of the battery, but also helps to alleviate the issue of stress concentration in the middle battery cells caused by volume expansion of the battery cells in the later stages of battery use, which may lead to lithium precipitation and capacity plunge in the middle battery cells. At the same time, it can also control the volume or mass proportion of the elastic buffer layer in the battery, balancing the high energy density of the battery.

The battery disclosed in the embodiments of the present application may be used in electric apparatuses that use a battery as a power source or in various energy storage systems that use a battery as an energy storage element. The electric apparatus may include, but is not limited to, mobile phones, tablets, laptops, electric toys, electric tools, electric bicycles, electric vehicles, ships, spacecraft, and the like. Electric toys may include fixed or mobile electric toys, such as game consoles, electric car toys, electric ship toys, and electric airplane toys, and spacecraft may include airplanes, rockets, space shuttles, and spaceships, among others.

A first aspect of the present application provides a battery, including: a first battery cell assembly, the first battery cell assembly including at least one first battery cell, and the first battery cell being internally provided with a first elastic buffer pad; and a second battery cell assembly, the second battery cell assembly including at least two second battery cells, and the at least two second battery cells being disposed on both sides of the first battery cell assembly along a thickness direction of the first battery cell assembly, where the thickness direction of the first battery cell assembly is consistent with a thickness direction of the first battery cell. Optionally, the battery may be a battery module or a battery pack.

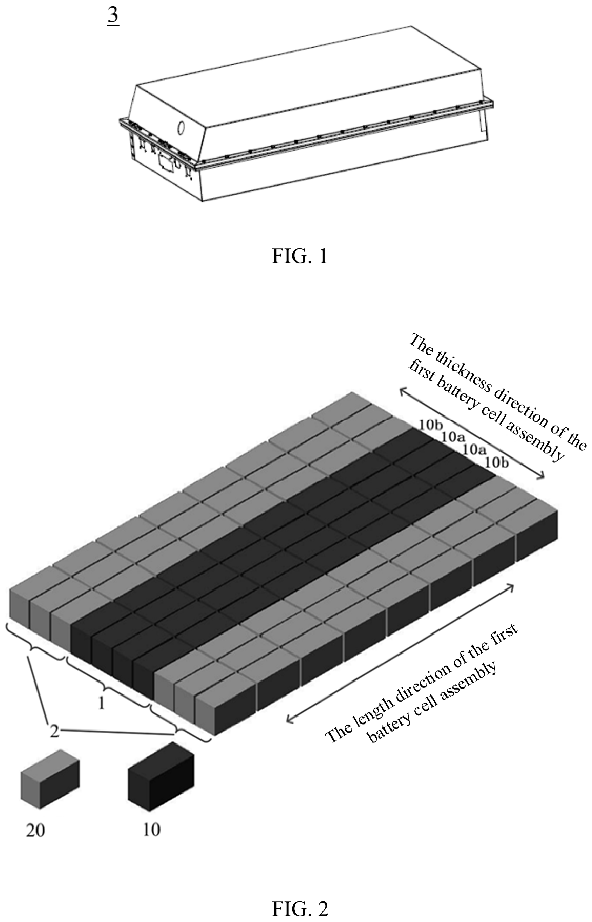

Referring to FIGs. 1 to 4, the battery 3 of the first aspect of the present application includes: a first battery cell assembly 1, the first battery cell assembly 1 including at least one first battery cell 10, and the first battery cell 10 being internally provided with a first elastic buffer pad 130; and a second battery cell assembly 2, the second battery cell assembly 2 including at least two second battery cells 20, and the at least two second battery cells 20 being disposed on both sides of the first battery cell assembly 1 along the thickness direction of the first battery cell assembly 1, where the thickness direction of the first battery cell assembly 1 is consistent with the thickness direction of the first battery cell 10. Taking a prismatic battery as an example, the battery typically includes a plurality of battery cells, and the stacking manner of the plurality of battery cells includes stacking along the thickness direction of the battery cells. In the thickness direction of the battery cells, the battery cells located in the middle of the battery (such as the first battery cell assembly 1 shown in FIG. 2, especially the first battery cells 10 closer to the middle of the battery in the thickness direction of the battery cells) are often the parts that experience the most severe expansion and the greatest expansion force during use. By introducing elastic buffer pads inside the battery cells, the compressibility of the elastic buffer pads can be utilized to absorb the volume expansion of the electrode assemblies in the battery cells, improving the volume stability of the battery cells, reducing the expansion force of the battery cells, and thereby reducing the probability of lithium precipitation and capacity plunge in the battery cells located in the middle of the battery due to stress concentration. By combining a prismatic housing, a wound electrode assembly, and an elastic buffer pad, the issue of uneven stress on the electrode plates in a prismatic wound battery can be alleviated, improving the stability of the battery cells. It can be understood that, in the present application, the first battery cell assembly 1 includes one or more first battery cells 10, the one or more first battery cells 10 being centrally arranged in the battery 3 along the thickness direction of the first battery cell 10, with no second battery cell 20 between two adjacent first battery cells 10; and the second battery cell assembly 2 includes at least two second battery cells 20, the at least two second battery cells 20 being divided into two parts, and the two parts being disposed on both sides of the first battery cell assembly 1 along the thickness direction of the first battery cell assembly 1.

The battery of the first aspect of the present application has at least the following beneficial effects: In the thickness direction of the first battery cell assembly, by incorporating a first elastic buffer pad only in the first battery cells located in the middle, while not providing elastic buffer pads in the second battery cells located on both sides of the first battery cell assembly in the thickness direction, it is not only conducive to absorbing the volume expansion of the battery cells with relatively more severe expansion and greater expansion force in the battery, reducing the expansion force of the battery cells in the middle of the battery, and improving the volume stability of the battery, but also helps to alleviate the issue of stress concentration in the middle battery cells caused by volume expansion of the battery cells in the later stages of battery use, which may lead to lithium precipitation and capacity plunge in the middle battery cells. At the same time, it can also balance the high energy density of the battery.

It can be understood that, in the embodiments of the present application, the first battery cell includes, but is not limited to, an electrode assembly and an elastic buffer pad, and the second battery cell includes, but is not limited to, an electrode assembly; for example, the first battery cell and the second battery cell may further include an electrolyte and a housing; in the embodiments of the present application, the types of the first battery cell and the second battery cell may be the same, for example, both may include, but are not limited to, secondary battery cells, primary battery cells, and the like; for another example, both may include, but are not limited to, lithium-ion battery cells, sodium-ion battery cells, magnesium-ion battery cells, and the like; for yet another example, both may include, but are not limited to, hard-shell battery cells, pouch battery cells, and the like, and hard-shell battery cells include, but are not limited to, metal-shell battery cells, and the like; for still yet another example, both may include, but are not limited to, flat shapes, cuboid shapes, or other shapes, and the like.

Further, the battery of the first aspect of the present application, while satisfying the above conditions, may further control the compression rate, porosity, material, thickness, and the like, of the elastic buffer layer and the support layer to further improve the performance of the battery. That is, while satisfying the above conditions, it may optionally satisfy one or more of the following conditions.

In some embodiments of the present application, with a length direction of the first battery cell assembly 1 as a row and the thickness direction of the first battery cell assembly 1 as a column, the battery 3 may satisfy at least one of the following conditions: the first battery cell assembly 1 may include a plurality of first battery cells 10 arranged in rows and/or columns; and the first battery cell assembly 1 may be independently provided with a plurality of second battery cells 20 arranged in rows and/or columns on both sides along the thickness direction of the first battery cell assembly.

Referring to FIGs. 1 to 2, the battery 3 typically includes a plurality of battery cells, and the specific number of battery cells may be flexibly selected based on energy storage requirements. In some specific embodiments, the battery 3 may include a plurality of first battery cells 10 and a plurality of second battery cells 20, and the plurality of first battery cells 10 may be arranged in a single row, a single column, or multiple rows and multiple columns; for example, as shown in FIGs. 1 to 2, as a specific example, the battery 3 may include 32 first battery cells 10, and the 32 first battery cells 10 may be arranged in 4 rows and 8 columns. Correspondingly, the first battery cell assembly 1 may also be independently provided with a plurality of second battery cells 20 arranged in rows and/or columns on both sides along the thickness direction of the first battery cell assembly 1; for example, as shown in FIG. 2, as a specific example, the first battery cell assembly 1 may be provided with 3 rows and 8 columns of second battery cells 20 on both sides along the thickness direction of the first battery cell assembly 1. It should be noted that the number of rows of the second battery cells 20 provided on both sides of the first battery cell assembly 1 along the thickness direction of the first battery cell assembly 1 may be the same or different.

Adopting the above arrangement is conducive to reducing the volume expansion and expansion force of the battery cells in the region with relatively more severe expansion and greater expansion force in the battery, improving the volume stability of the battery, and reducing the probability of stress concentration in the battery cells located in the middle of the battery, which may lead to lithium precipitation and capacity plunge; at the same time, independently providing a plurality of second battery cells arranged in rows and/or columns on both sides of the first battery cell assembly along the thickness direction of the first battery cell assembly can also balance the high energy density of the battery.

In some embodiments of the present application, the at least two second battery cells 20 may be symmetrically arranged on both sides of the first battery cell assembly 1 along the thickness direction of the first battery cell assembly 1.

Referring to FIG. 2, the second battery cell assemblies 20 located on both sides of the first battery cell assembly 1 in the thickness direction may be symmetrically arranged on both sides of the first battery cell assembly 1. Adopting this arrangement is conducive to maintaining relatively consistent pressure exerted on the outer case due to the expansion of the battery cells during long-term use of the battery 3, avoiding the issue of localized stress concentration due to uneven expansion of the first battery cell assembly along its thickness direction, which may affect the overall structural stability of the battery.

By symmetrically arranging the second battery cells along the thickness direction of the first battery cell assembly on both sides of the first battery cell assembly, it is conducive to improving the overall structural stability of the battery.

In some embodiments of the present application, based on a total number of the first battery cells 10 and the second battery cells 20, a proportion of the number of the first battery cells 10 may be 30% to 70%.

For example, based on the total number of the first battery cells 10 and the second battery cells 20, the proportion of the number of the first battery cells 10 may be 30%, 35%, 40%, 45%, 50%, 55%, 60%, 65%, 70%, and the like. The first battery cells 10 are provided with the first elastic buffer pads 130, while the second battery cells 20 are not provided with the first elastic buffer pads 130. If the number of first battery cells in the battery is too low, the effect of reducing the volume expansion and expansion force of the battery cells in the middle of the battery is not significant. The provision of elastic buffer pads may have a certain negative impact on the energy density of the battery, therefore, if the number of first battery cells is too high, it is likely to have a significant negative impact on the energy density of the battery.

By controlling the proportion of the number of first battery cells in the battery to satisfy the given condition range, it is conducive to improving the volume expansion of the battery cells, reducing the probability of stress concentration in the battery cells located in the middle of the battery due to large expansion forces, which may lead to lithium precipitation and capacity plunge, while also balancing the high energy density of the battery.

In some embodiments of the present application, the first battery cell 10 may include a housing 110, at least one electrode assembly 120, and at least one first elastic buffer pad 130, the electrode assembly 120 being disposed within the housing 110, and in a thickness direction of the electrode assembly 120, the first elastic buffer pad 130 may be disposed between the electrode assembly 120 and the housing 110, and/or between two adjacent electrode assemblies 120.

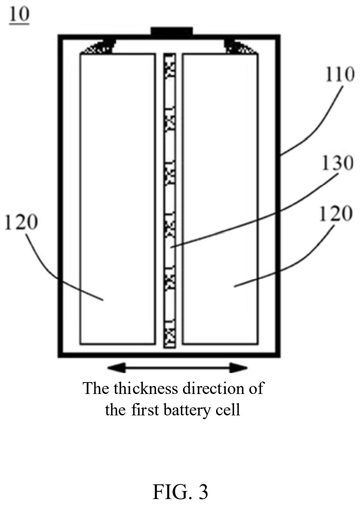

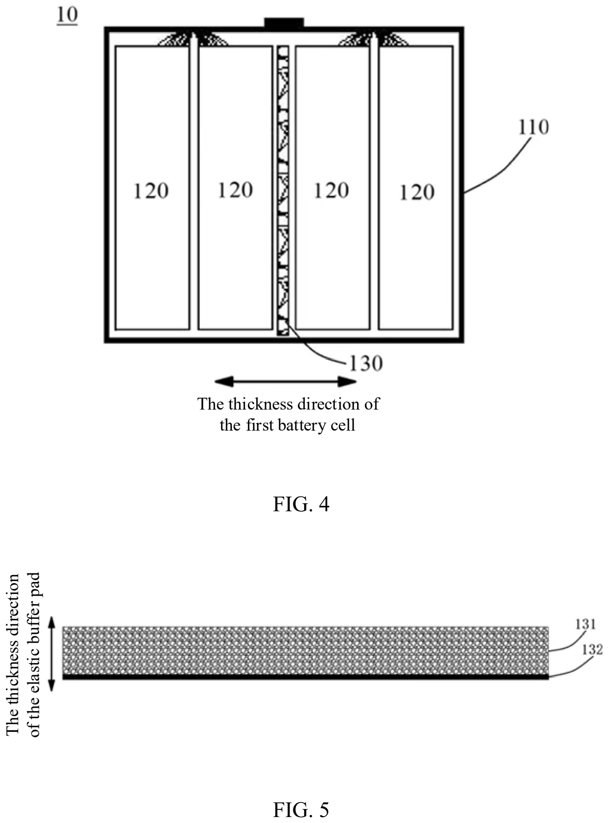

In actual operation, both opposing sides of the first elastic buffer pad 130 in its thickness direction may be in contact with the electrode assembly 120, or one side may be in contact with the electrode assembly 120, and the other side may be in contact with the housing 110. As some specific embodiments, when the first battery cell 10 includes only one electrode assembly 120, the first elastic buffer pad 130 is disposed between the electrode assembly 120 and the housing 110, one of the two sides of the first elastic buffer pad 130 in the thickness direction may be in contact with the electrode assembly 120, and the other side may be in contact with an inner wall (for example, an inner surface of a side wall) of the housing 110; as other specific embodiments, when the first battery cell 10 includes at least two electrode assemblies 120, the number of first elastic buffer pads 130 may be one or more, the one or more first elastic buffer pads 130 may be disposed only between the electrode assemblies 120, or only between the electrode assemblies 120 and the housing 110, or partially between the electrode assemblies 120 and partially between the electrode assemblies 120 and the housing 110. As some specific examples, the elastic buffer pads 130 disposed between the electrode assemblies 120 and the housing 110 may also be partially disposed between the electrode assemblies 120 and the side walls of the housing 110, and partially between the electrode assemblies 120 and the bottom wall and/or top wall of the housing 110, optionally, they may be disposed between the electrode assemblies 120 and the side walls of the housing 110. As some specific examples, referring to FIGs. 3 and 4, when the first battery cell 10 includes at least two electrode assemblies 120 and one elastic buffer pad 130, in the thickness direction of the first battery cell 10, the first elastic buffer pad 130 may be disposed between two electrode assemblies 120 located in the middle of the first battery cell 10, the thickness direction of the elastic buffer pad 130 being the same as the thickness direction of the first battery cell 10, optionally the same as the thickness direction of the first battery cell 10 and the electrode assemblies 120. Optionally, the first battery cell 10 may be a prismatic wound battery cell. For a wound electrode assembly, there is an issue of uneven stress on the electrode plates in a prismatic housing, and by incorporating an elastic buffer pad between the electrode assemblies or between the electrode assemblies and the housing, this issue can be effectively alleviated.

Controlling the first battery cell to have the described structure can utilize the first elastic buffer pad to absorb the volume expansion of the electrode assembly and further restrict the volume expansion of the electrode assembly through the resilience of the elastic buffer pad after compression, thereby improving the volume stability of the first battery cell, reducing its thickness growth rate and expansion force during cycling, thus improving the volume stability of the battery, and reducing the probability of stress concentration in the battery cells located in the middle of the battery, which may lead to lithium precipitation and capacity plunge.

In some embodiments of the present application, the first elastic buffer pad 130 may include an elastic buffer layer 131 and a support layer 132 disposed on at least one side of the elastic buffer layer 131, the support layer 132 being configured to support the elastic buffer layer 131.

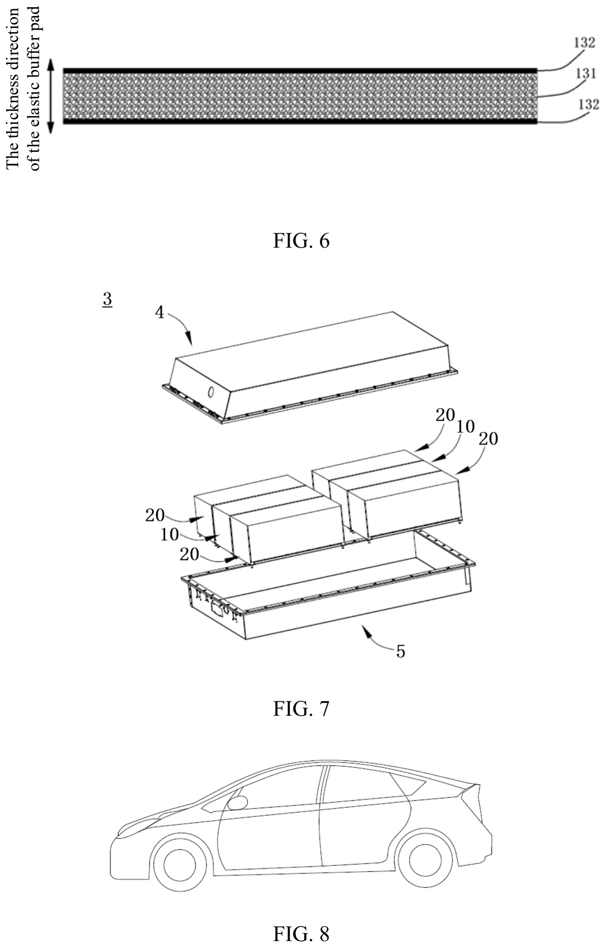

The structure of the first elastic buffer pad 130 may be understood with reference to FIGs. 5 or 6. The support layer 132 is configured to fix and support the elastic buffer layer 131 and may be disposed on at least one of the six surfaces of the elastic buffer layer 131, for example, all six surfaces may be provided with support layers, or it may be disposed on at least one of the two sides of the elastic buffer layer 131 along its thickness direction, optionally on at least one side of the elastic buffer layer 131 in the thickness direction, thereby restricting the deformation of the elastic buffer layer 131 in a direction perpendicular to its thickness direction. The deformation resistance of the support layer 132 is superior to that of the elastic buffer layer 131. In current solutions for providing buffer pads between battery cells or within battery cells, the buffer pads commonly use foamed materials with numerous micropores. During the production process of battery cells, a vacuum baking process (that is, a vacuum baking process used to control the moisture content of the cell, performed under negative pressure to lower the boiling point and promote moisture evaporation) is required, which causes the buffer pad to shrink, losing its intended function. In the first elastic buffer pad 130, by compositing the support layer 132 with the elastic buffer layer 131, support can be provided to the elastic buffer layer 131, not only suppressing the thermal shrinkage of the elastic buffer layer during the vacuum baking process, especially in the two-dimensional direction perpendicular to its thickness direction, alleviating the issue of losing its original function due to thermal shrinkage, but also alleviating the issue of material damage due to mechanical stress in the later stages of battery use. Furthermore, placing the first elastic buffer pad inside the first battery cell is conducive to further improving the volume stability of the battery cell and the battery during long-term use, enhancing long-term performance.

Adopting the first elastic buffer pad with the above structure can further enhance its reliability during the preparation and use of the battery cell, which is conducive to improving the volume stability of the first battery cell and the battery during long-term use, enhancing the long-term performance of the battery.

In some embodiments of the present application, optionally, an elastic modulus of the elastic buffer layer 131 is less than an elastic modulus of the support layer 132.

In the present application, the elastic modulus of the elastic buffer layer refers to the stress required to produce a unit elastic deformation in the elastic buffer layer under external force, and the greater its value, the greater the stress required to cause a certain elastic deformation in the elastic buffer layer, that is, the greater the stiffness of the elastic buffer layer, and the smaller the elastic deformation under a certain stress. Correspondingly, the elastic modulus of the support layer refers to the stress required to produce a unit elastic deformation in the support layer under external force. The elastic modulus of the elastic buffer layer and the support layer is mainly determined by their materials. When comparing the elastic modulus of the elastic buffer layer and the support layer, the comparison may be based on their materials, or on the stress required to produce the same amount of elastic deformation under the same conditions, or on the amount of elastic deformation under the same stress.

By controlling the elastic modulus of the elastic buffer layer to be less than the elastic modulus of the support layer, the support layer can have relatively good rigidity, thereby providing good support to the elastic buffer layer, facilitating the suppression of thermal shrinkage of the elastic buffer layer during the vacuum baking process, alleviating the issue of losing its original function due to thermal shrinkage, and alleviating the issue of material damage due to mechanical stress in the later stages of battery use.

In some embodiments of the present application, optionally, under a same pressure, a compression rate of the elastic buffer layer 131 is greater than a compression rate of the support layer 132.

In the present application, let the free volume of the elastic buffer layer be V₁, and the volume of the elastic buffer layer under a certain compressive stress be V₂, then the compressible deformation amount of the elastic buffer layer under a certain compressive stress is V₂ - V₁, and the compression rate of the elastic buffer layer under a certain compressive stress is (V₂ - V₁) / V₁ × 100%. Correspondingly, the compression rate of the support layer under a certain compressive stress can be obtained using the same method. Considering that when the first elastic buffer pad is subjected to compressive stress, its compressible deformation is mainly reflected in the thickness direction, with relatively small compressible deformation in the two-dimensional plane perpendicular to its thickness direction, when comparing the compression rates of the elastic buffer layer and the support layer under the same pressure, it may be characterized based on the ratio of their volume compressible deformation amount to their free volume, or based on the ratio of their thickness change to their free thickness, that is, let the free thickness of the elastic buffer layer be d₁', and the thickness of the elastic buffer layer under a certain compressive stress be d₂', then (d₂' - d₁') / d₁' × 100% can be used to estimate the compression rates of the elastic buffer layer and the support layer under the same pressure. Here, the free volume of the elastic buffer layer or the support layer refers to the volume of the elastic buffer layer or the support layer when the first elastic buffer pad is not subjected to any external force, and the free thickness of the elastic buffer layer or the support layer refers to the thickness of the elastic buffer layer or the support layer when the first elastic buffer pad is not subjected to any external force. When the first elastic buffer pad 130 is placed between the electrode assemblies 120 or between the electrode assembly 120 and the housing 110, its two opposing sides in the thickness direction are arranged relative to the surface of the electrode assembly or the inner wall of the housing. When the electrode assembly expands, the elastic buffer pad is subjected to compressive stress along its thickness direction, the elastic buffer layer contracts under the compressive stress, its thickness decreases, and the support layer is mainly configured to support the elastic buffer layer, limiting its deformation in the direction perpendicular to the thickness direction.

By controlling the compression rate of the elastic buffer layer to be greater than the compression rate of the support layer under the same pressure, the elastic buffer layer can primarily suppress the volume changes of the battery cell, while enabling the support layer to provide good support to the elastic buffer layer.

In some embodiments of the present application, the compression rate of the elastic buffer layer 131 under 1 MPa pressure may be 50% to 90%, optionally 60% to 80%; and the compression rate of the support layer 132 under 1 MPa pressure may be less than or equal to 5%.

For example, the compression rate of the elastic buffer layer 131 under l MPa pressure may be 50%, 55%, 60%, 65%, 70%, 75%, 80%, 85%, 90%, and the like, or may be a range composed of any of the above values, and further, the compression rate of the elastic buffer layer 131 under 1 MPa pressure may be 60% to 80%. The compression rate of the support layer 132 under 1 MPa pressure may be 0%, 1%, 2%, 3%, 4%, 5%, and the like, or may be a range composed of any of the above values. When the compression rate of the elastic buffer layer under 1 MPa pressure is too low, the effect of suppressing the volume changes of the first battery cell is not significant, and when the compression rate of the elastic buffer layer under 1 MPa pressure is too high, it is likely to affect the resilience of the elastic buffer layer. When the compression rate of the support layer under 1 MPa pressure is too high, it is likely to have a negative impact on the support function for the elastic buffer layer. As described above, the compression rates of the elastic buffer layer and the support layer under 1 MPa pressure can be obtained by placing the elastic buffer pad in a press and applying a compressive stress of 1 MPa, and calculating the ratio of the volume compressible deformation amount to the free volume under 1 MPa compressive stress, or estimating by calculating the ratio of the thickness deformation amount to the free thickness under 1 MPa compressive stress.

By controlling the compression rates of the elastic buffer layer and the support layer under 1 MPa pressure to satisfy the given range, the elastic buffer layer can effectively suppress the volume changes of the first battery cell, while allowing the support layer to provide good support to the elastic buffer layer.

In some embodiments of the present application, the compression rate of the elastic buffer layer 131 under 3 MPa pressure may be 60% to 95%, optionally 80% to 95%; and the compression rate of the support layer 132 under 3 MPa pressure may be less than or equal to 8%.

For example, the compression rate of the elastic buffer layer 131 under 3 MPa pressure may be 65%, 70%, 75%, 80%, 85%, 90%, and the like, or may be a range composed of any of the above values, and further, the compression rate of the elastic buffer layer 131 under 3 MPa pressure may be 80% to 95%. The compression rate of the support layer 132 under 3 MPa pressure may be 0%, 1%, 2%, 3%, 4%, 5%, 6%, 7%, 8%, and the like, or may be a range composed of any of the above values. The compression rates of the elastic buffer layer and the support layer under 3 MPa pressure may be measured as described above. Optionally, the compression rate of the elastic buffer layer 131 under 1 MPa pressure may be 50% to 90%, optionally 60% to 80%, and under 3 MPa pressure may be 60% to 95%, optionally 80% to 95%; and the compression rate of the support layer 132 under 1 MPa pressure may be less than or equal to 5%, and under 3 MPa pressure may be less than or equal to 8%.

By controlling the compression rates of the elastic buffer layer and the support layer under 3 MPa pressure to satisfy the given range, the elastic buffer layer can effectively suppress the volume changes of the first battery cell, while allowing the support layer to provide good support to the elastic buffer layer.

In some embodiments of the present application, a porosity of the elastic buffer layer 131 may be greater than a porosity of the support layer 132.

The specific layer structure of the elastic buffer layer 131 is not particularly limited and may include, but is not limited to, a porous elastic layer structure. When the elastic buffer layer 131 has a porous structure, its porosity may be greater than the porosity of the support layer 132, and in this case, the support layer 132 may be a solid layer structure or a layer structure with low porosity.

By controlling the porosity of the elastic buffer layer to be greater than the porosity of the support layer, on one hand, the support layer can have a smaller compression rate than the elastic buffer layer under the same pressure conditions, providing good support to the elastic buffer layer, and on the other hand, it can limit excessive embedding of the elastic buffer layer into the pore structure of the support layer, which is conducive to maintaining the structural stability of the first elastic buffer pad.

In some embodiments of the present application, the porosity of the elastic buffer layer 131 may be 40% to 95%, optionally 55% to 90%, and further optionally 70% to 85%.

For example, the porosity of the elastic buffer layer 131 may be 40%, 45%, 50%, 55%, 60%, 65%, 70%, 75%, 80%, 85%, 90%, 95%, and the like, or may be a range composed of any of the above values. Increasing the porosity of the elastic buffer layer is conducive to improving the compression rate of the elastic buffer layer under compressive stress, but when its porosity is too high, it is likely to affect the resilience of the elastic buffer layer. Optionally, the porosity of the elastic buffer layer 131 may be 55% to 90%, and further optionally may be 70% to 85%.

By controlling the porosity of the elastic buffer layer within the given range, the elastic buffer layer can have good compressibility and resilience, effectively suppressing the volume changes of the first battery cell.

In some embodiments of the present application, the porosity of the support layer 132 may be less than or equal to 5%.

For example, the porosity of the support layer 132 may be 0%, 1%, 2%, 3%, 4%, 5%, and the like, or may be a range composed of any of the above values. Optionally, the porosity of the support layer 132 may be controlled to be less than or equal to 3%.

By controlling the porosity of the support layer within the given range, it is not only conducive to providing good support to the elastic buffer layer but also limits excessive embedding of the elastic buffer layer into the support layer, which is conducive to maintaining the structural stability of the first elastic buffer pad.

In some embodiments of the present application, the elastic buffer layer 131 may include at least one of foamed polyethylene, polypropylene, polyurethane, or silicone rubber.

The elastic buffer layer 131 may select materials with good compressibility and resilience, including but not limited to materials within the given range. For example, the elastic buffer layer 131 may include, but is not limited to, polypropylene, and when it includes only polypropylene, the polypropylene may be a modified polypropylene elastomer material, for example, modified by adding polyethylene or rubber components. Optionally, the elastic buffer layer 131 may be a silicone rubber layer. Further optionally, the elastic buffer layer 131 may be a porous structure layer, for example, a foamed polyethylene layer, a foamed polyurethane layer, and the like.

By controlling the elastic buffer layer to be a material within the given range, the elastic buffer layer can have good compressibility and resilience, effectively suppressing the volume changes of the first battery cell.

In some embodiments of the present application, the support layer 132 may include at least one of high-density polyethylene, polymethyl methacrylate, polyethylene terephthalate, or polytetrafluoroethylene.

The support layer 132 may select materials with high hardness or tensile strength, including but not limited to materials within the given range. As some specific examples, the support layer 132 may be a high-density polyethylene layer, a polymethyl methacrylate layer, or a polyethylene terephthalate layer, and the like.

By controlling the support layer to be a material within the given range, the support layer can have relatively high hardness or tensile strength, providing good support to the elastic buffer layer, which is conducive to maintaining the structural stability of the first elastic buffer pad.

In some embodiments of the present application, in the first battery cell 10, at least one first elastic buffer pad 130 may include one elastic buffer layer 131 and one support layer 132.

The numbers of layers of the elastic buffer layer 131 and the support layer 132 in the first elastic buffer pad 130 are not particularly limited; for example, the first elastic buffer pad 130 may be a double-layer structure including one elastic buffer layer 131 and one support layer 132, or a triple-layer structure including one elastic buffer layer 131 and two support layers 132, or a four-layer structure including two elastic buffer layers 131 and two support layers 132, and the like. In the multilayer structure of the first elastic buffer pad 130, the elastic buffer layers 131 and the support layers 132 may be alternately stacked. Optionally, the total number of layers of the elastic buffer layer 131 and the support layer 132 in the first elastic buffer pad 130 may be less than or equal to 3, thereby enabling the first elastic buffer pad to effectively suppress the volume changes of the first battery cell, while reducing the negative impact of the first elastic buffer pad on the energy density of the first battery cell and the battery due to excessive thickness. As some specific embodiments, a single first battery cell 10 may include one or more elastic buffer pads 130, and at least one of the one or more elastic buffer pads 130 may be a double-layer structure including one elastic buffer layer 31 and one support layer 32.

By controlling at least one first elastic buffer pad in the first battery cell to include one elastic buffer layer and one support layer, the first elastic buffer pad can have good compressibility and resilience in its thickness direction, effectively suppressing the volume changes of the first battery cell, and is also conducive to reducing the thickness of the first elastic buffer pad, reducing its potential negative impact on the energy density of the first battery cell.

In some embodiments of the present application, in the first battery cell 10, at least one first elastic buffer pad 130 may include one elastic buffer layer 131 and two support layers 132, the elastic buffer layer 131 being sandwiched between the two support layers 132.

A single first battery cell 10 may include one or more first elastic buffer pads 130, and at least one of the one or more first elastic buffer pads 130 may be a triple-layer structure including one elastic buffer layer 131 and two support layers 132, with the elastic buffer layer 131 sandwiched between the two support layers 132. Adopting this arrangement allows the two support layers to simultaneously provide bidirectional support to the elastic buffer layer, further restricting the thermal shrinkage of the elastic buffer layer in the two-dimensional direction perpendicular to its thickness direction during the vacuum baking process, as well as the deformation of the elastic buffer layer in the two-dimensional direction perpendicular to its thickness direction during the service life of the first battery cell, which is conducive to maintaining the structural stability of the first elastic buffer pad.

By controlling at least one first elastic buffer pad in the first battery cell to be a triple-layer structure with the elastic buffer layer sandwiched between two support layers, the first elastic buffer pad can have good compressibility and resilience in its thickness direction, effectively suppressing the volume changes of the first battery cell, and further alleviating the issue of the elastic buffer layer losing its original function due to thermal shrinkage during the vacuum baking process and the issue of material damage due to mechanical stress in the later stages of battery use.

In some embodiments of the present application, a free thickness of the elastic buffer layer 131 may be greater than a thickness of the support layer 132.

In the present application, the free thickness of the elastic buffer layer 131 and the thickness of the support layer 132 both refer to the free thickness, that is, the thickness of the elastic buffer layer 131 and the support layer 132 when the first elastic buffer pad 130 is not subjected to external force. A larger free thickness of the elastic buffer layer 131 is conducive to enhancing the compressible deformation amount of the first elastic buffer pad, suppressing the volume changes of the first battery cell. The support layer 132 is configured to support the elastic buffer layer 131, and its hardness or tensile strength is higher than that of the elastic buffer layer 131. Selecting a thinner thickness is conducive to reducing the potential negative impact of the first elastic buffer pad on the energy density of the first battery cell.

By controlling the free thickness of the elastic buffer layer to be greater than the thickness of the support layer, it can balance the compressible deformation amount of the first elastic buffer pad and the overall thickness of the first elastic buffer pad, which is conducive to maintaining the volume stability of the first battery cell, reducing the volume expansion and expansion force of the first battery cell during battery use, while also reducing the potential negative impact of the elastic buffer pad on the energy density of the battery cell.

In some embodiments of the present application, in a single first elastic buffer pad 130, a ratio of a total thickness of the support layer 132 to the free thickness of the elastic buffer layer 131 may be 0.005 to 0.1, optionally 0.02 to 0.05.

For example, in a single first elastic buffer pad, the ratio of the total thickness of the support layer 132 to the free thickness of the elastic buffer layer 131 may be 0.005, 0.01, 0.02, 0.03, 0.04, 0.05, 0.06, 0.07, 0.08, 0.09, 0.1, and the like, or may be a range composed of any of the above values, and further, the ratio of the total thickness of the support layer 132 to the thickness of the elastic buffer layer 131 may be 0.02 to 0.05. As some specific examples, when a single first elastic buffer pad 130 includes only one support layer 132 and one elastic buffer layer 131, the ratio of the thickness of the support layer 132 to the thickness of the elastic buffer layer 131 may be 0.005 to 0.1; as other specific examples, when a single first elastic buffer pad 130 includes two support layers 132 and one elastic buffer layer 131, the ratio of the total thickness of the two support layers 132 to the thickness of the single elastic buffer layer 131 may be 0.005 to 0.1. If the thickness proportion of the support layer in the first elastic buffer pad is too low, it is difficult to ensure the support function for the elastic buffer layer, and if the thickness proportion of the support layer is too high, it is likely to affect the compressible deformation capability of the first elastic buffer pad in its thickness direction.

By controlling the free thicknesses of the support layer and the elastic buffer layer in a single first elastic buffer pad to satisfy the given conditions, it can enable the support layer to provide good support to the elastic buffer layer, while balancing the compressible deformation amount of the first elastic buffer pad and the overall thickness of the first elastic buffer pad, which is conducive to maintaining the volume stability of the first battery cell, reducing the volume expansion and expansion force of the first battery cell during battery use, and reducing the potential negative impact of the first elastic buffer pad on the energy density of the first battery cell.

In some embodiments of the present application, the free thickness of the elastic buffer layer 131 may be 0.2 mm to 10 mm, and a thickness of a single support layer 132 may be 30 µm to 200 µm.

For example, the free thickness of the elastic buffer layer 131 may be 0.2 mm to 10 mm, such as 0.2 mm, 0.5 mm, 1 mm, 2 mm, 3 mm, 4 mm, 5 mm, 6 mm, 7 mm, 8 mm, 9 mm, 10 mm, and the like, or may be a range composed of any of the above values. The thickness of a single support layer 132 may be 30 µm, 50 µm, 70 µm, 90 µm, 110 µm, 130 µm, 150 µm, 170 µm, 190 µm, 200 µm, and the like, or may be a range composed of any of the above values. The free thickness of the elastic buffer layer refers to the thickness of the elastic buffer layer when the first elastic buffer pad is not subjected to any external force. The free thickness of the elastic buffer layer and the thickness of the support layer may be measured using a micrometer or a vernier caliper, such as a Mitutoyo ID-C112MX micrometer thickness gauge or a similar instrument.

By controlling the free thicknesses of the support layer and the elastic buffer layer in the first elastic buffer pad to satisfy the given conditions, it can enable the support layer to provide good support to the elastic buffer layer, while balancing the compressible deformation amount of the first elastic buffer pad and the overall thickness of the first elastic buffer pad, which is conducive to maintaining the volume stability of the first battery cell, reducing the volume expansion and expansion force of the first battery cell during battery use, and reducing the potential negative impact of the elastic buffer pad on the energy density of the battery cell.

In some embodiments of the present application, a free thickness of a single first elastic buffer pad 130 may be 2% to 15% of a thickness of a single electrode assembly 120, optionally 5% to 10% of the thickness of the single electrode assembly 120.

For example, the free thickness of a single first elastic buffer pad 130 may be 2%, 4%, 6%, 8%, 10%, 12%, 14%, 15%, and the like, of the thickness of a single electrode assembly 120, or may be a range composed of any of the above values. Optionally, the free thickness of a single first elastic buffer pad 30 may be 5% to 10% of the thickness of a single electrode assembly 120. The free thickness of the first elastic buffer pad is its thickness when not subjected to external force. If the free thickness of the first elastic buffer pad 30 is too low, its ability to absorb the expansion of the electrode assembly is limited, which is not conducive to maintaining the volume stability of the battery cell during its service life, especially in the later stages. If the free thickness of the first elastic buffer pad 30 is too high, it will affect the energy density of the battery cell. The free thickness of the first elastic buffer pad may be measured using a Mitutoyo ID-C112MX micrometer thickness gauge or a similar instrument; in the embodiments of the present application, the thickness of the electrode assembly is the thickness measured when the capacity is 90%, which may be measured using a Yinghaoda PPG1200 battery thickness tester, with a test pressure of 400 g.

By controlling the free thickness of a single first elastic buffer pad within the given range, it can balance the compressible deformation amount of the first elastic buffer pad and the overall thickness of the first elastic buffer pad, which is conducive to maintaining the volume stability of the first battery cell, reducing the volume expansion and expansion force of the first battery cell during battery use, and reducing the potential negative impact of the elastic buffer pad on the energy density of the battery cell.

In some embodiments of the present application, in the first battery cell 10, a sum of thicknesses of all the electrode assemblies 120 and free thicknesses of all the first elastic buffer pads 130 may be 96% to 105% of a thickness of an inner cavity of the housing 110, optionally 98% to 103% of the thickness of the inner cavity of the housing 110.

For example, the sum of the thicknesses of all the electrode assemblies 120 and the free thicknesses of all the first elastic buffer pads 130 may be 96%, 97%, 98%, 99%, 100%, 101%, 102%, 103%, 104%, 105%, and the like, of the thickness of the inner cavity of the housing 110, or may be a range composed of any of the above values. Specifically, when the first battery cell 10 includes m electrode assemblies 120 and n first elastic buffer pads 130, the sum of the total thickness of the m electrode assemblies 120 and the total free thickness of the n first elastic buffer pads 130 may be 96% to 105% of the thickness of the inner cavity of the housing 110, where m and n may each independently be a positive integer. As a specific example, when the first battery cell includes two electrode assemblies and one elastic buffer pad, the sum of the thicknesses of the two electrode assemblies and the free thickness of the one first elastic buffer pad may be 96% to 105% of the thickness of the inner cavity of the housing, optionally 98% to 103% of the thickness of the inner cavity of the housing. Based on the thickness of the inner cavity of the housing, if the sum of the thicknesses of all the electrode assemblies and the free thicknesses of all the first elastic buffer pads is too low, it is not conducive to increasing the energy density of the first battery cell, and it is also not conducive to the stability of the electrode assemblies within the housing. If the sum of the thicknesses of all the electrode assemblies and the free thicknesses of all the first elastic buffer pads is too high, when assembling the electrode assemblies and the elastic buffer pads with the battery housing, it will reduce the spacing between the electrode assemblies and/or the elastic buffer pads and the inner wall of the battery housing, which is likely to increase the difficulty of inserting the electrode assemblies and the elastic buffer pads.

By controlling the thicknesses of the electrode assemblies, the first elastic buffer pads, and the inner cavity of the housing in the first battery cell to satisfy the given condition range, it can reduce the difficulty of inserting the electrode assemblies and the first elastic buffer pads into the housing, while balancing the high energy density of the first battery cell and the stability of the electrode assemblies within the housing.

In some embodiments of the present application, the elastic buffer layer 131 may be adhesively connected to the support layer 132.

The connection method between the elastic buffer layer 131 and the support layer 132 is not particularly limited, as long as the support layer can provide good support to the elastic buffer layer and can restrict the deformation of the elastic buffer layer in the two-dimensional plane perpendicular to its thickness direction. For example, as some specific embodiments, the elastic buffer layer 131 and the support layer 132 may be adhesively connected, and the adhesive used for the adhesive connection may include, but is not limited to, polyvinylidene fluoride, and the like.

By adhesively connecting the elastic buffer layer to the support layer, it can provide good support and fixation to the elastic buffer layer, effectively suppressing the thermal shrinkage of the elastic buffer layer during the vacuum baking process, especially in the two-dimensional direction perpendicular to its thickness direction, alleviating the issue of losing its original function due to thermal shrinkage, while also alleviating the issue of material damage due to mechanical stress in the later stages of battery use.

In some embodiments of the present application, an interlayer peel strength between the elastic buffer layer 131 and the support layer 132 may be greater than or equal to 10 N/15 mm, optionally greater than or equal to 20 N/15 mm.

For example, the interlayer peel strength between the elastic buffer layer 131 and the support layer 132 may be greater than or equal to 10 N/15 mm, greater than or equal to 15 N/15 mm, greater than or equal to 20 N/15 mm, greater than or equal to 25 N/15 mm, greater than or equal to 30 N/15 mm, greater than or equal to 35 N/15 mm, and the like. If the interlayer peel strength between the elastic buffer layer and the support layer is too low, it will affect the ability of the support layer to suppress the deformation of the elastic buffer layer in the two-dimensional direction perpendicular to its thickness direction. The interlayer peel strength between the elastic buffer layer 131 and the support layer 132 may be measured in accordance with GB/T 8808-1988, with a sample width of 15 mm.

By controlling the interlayer peel strength between the elastic buffer layer and the support layer to satisfy the given range, it is conducive to further suppressing the thermal shrinkage of the elastic buffer layer during the vacuum baking process, especially in the two-dimensional direction perpendicular to its thickness direction, alleviating the issue of losing its original function due to thermal shrinkage, while also alleviating the issue of material damage due to mechanical stress in the later stages of battery use.

In some embodiments of the present application, a tensile strength of the support layer 132 may be greater than or equal to 20 MPa, optionally greater than or equal to 50 MPa.

For example, the tensile strength of the support layer 132 may be greater than or equal to 20 MPa, greater than or equal to 30 MPa, greater than or equal to 40 MPa, greater than or equal to 50 MPa, greater than or equal to 60 MPa, greater than or equal to 80 MPa, greater than or equal to 100 MPa, and the like. Increasing the tensile strength of the support layer is conducive to further reducing its compression rate under external force, providing good support to the elastic buffer layer. The tensile strength of the support layer may be measured in accordance with GB/T 1040.1-2018.

By controlling the tensile strength of the support layer to satisfy the given range, it can further enable the support layer to provide good support to the elastic buffer layer, which is conducive to suppressing the thermal shrinkage of the elastic buffer layer during the vacuum baking process, especially in the two-dimensional direction perpendicular to its thickness direction, alleviating the issue of losing its original function due to thermal shrinkage, while also alleviating the issue of material damage due to mechanical stress in the later stages of battery use.

In some embodiments of the present application, in the first elastic buffer pad 130 disposed between the electrode assembly 120 and the housing 110, a thermal conductivity of the elastic buffer layer 131 and/or the support layer 132 may be greater than or equal to 10 W/(m·°C), optionally greater than or equal to 20 W/(m·°C).

For example, the thermal conductivity of at least one of the elastic buffer layer 131 and the support layer 132 may be greater than or equal to 10 W/(m·°C), greater than or equal to 12 W/(m·°C), greater than or equal to 15 W/(m·°C), greater than or equal to 18 W/(m·°C), greater than or equal to 20 W/(m·°C), greater than or equal to 25 W/(m·°C), greater than or equal to 30 W/(m·°C), greater than or equal to 35 W/(m·°C), and the like. As some specific examples, the thermal conductivity of both the elastic buffer layer 131 and the support layer 132 may be greater than or equal to 10 W/(m·°C), for example, greater than or equal to 20 W/(m·°C). A higher thermal conductivity is conducive to rapidly transferring heat from within the first battery cell, improving the heat dissipation effect of the first battery cell. The thermal conductivity of the elastic buffer layer and the support layer may be measured in accordance with GB/T 10295.

By controlling the thermal conductivity of the elastic buffer layer and/or the support layer in the first elastic buffer pad disposed between the electrode assembly and the housing to satisfy the given range conditions, it can increase the thermal conductivity of the buffer pad, reducing heat accumulation inside the first battery cell.

In some embodiments of the present application, in the first elastic buffer pad 130 disposed between two adjacent electrode assemblies 120, a thermal conductivity of the elastic buffer layer 131 and/or the support layer 132 may be less than or equal to 0.1 W/(m·°C), optionally less than or equal to 0.05 W/(m·°C).

For example, the thermal conductivity of at least one of the elastic buffer layer 131 and the support layer 132 may be less than or equal to 0.1 W/(m·°C), less than or equal to 0.05 W/(m·°C), less than or equal to 0.01 W/(m·°C), less than or equal to 0.005 W/(m·°C), and the like. As some specific examples, the thermal conductivity of both the elastic buffer layer 131 and the support layer 132 may be less than or equal to 0.1 W/(m·°C), for example, less than or equal to 0.05 W/(m·°C). A lower thermal conductivity is conducive to insulating heat conduction between battery assemblies, preventing the failure of one electrode assembly from causing the failure of other electrode assemblies. The thermal conductivity of the elastic buffer layer and the support layer may be measured in accordance with GB/T 10295.

By controlling the thermal conductivity of the elastic buffer layer and/or the support layer in the first elastic buffer pad disposed between two adjacent electrode assemblies to satisfy the given range conditions, it can enhance the thermal insulation capability of the buffer pad, preventing the failure of one electrode assembly from causing the failure of other electrode assemblies, reducing the probability of thermal runaway in the first battery cell.

In some embodiments of the present application, the first elastic buffer pad 130 may be disposed between two adjacent electrode assemblies 120.

In a single battery cell, the middle part is often the part that experiences the most severe swelling and the greatest expansion force during the use of the battery cell. By disposing the first elastic buffer pad 130 between two adjacent electrode assemblies 120, it can alleviate the expansion force of this part of the electrode assemblies, while also facilitating contact between the electrode assemblies and the inner wall of the housing, improving the heat conduction effect.

In the first battery cell, by disposing the first elastic buffer pad between two adjacent electrode assemblies, it not only prevents the electrode plates in the central region of two adjacent electrode assemblies from being subjected to significant compression, avoiding lithium precipitation issues and battery performance degradation caused thereby, but also facilitates contact between the electrode assembly and the housing, enhancing the heat dissipation capability of the first battery cell.

In some embodiments of the present application, in the thickness direction of the first battery cell assembly 1, free thicknesses of the first elastic buffer pads 130 in different first battery cells 10 may gradually decrease from the middle of the first battery cell assembly 1 toward both sides.

Referring to FIG. 2, when the first battery cell assembly 1 includes a plurality of first battery cells 10 arranged along its thickness direction, assuming the arrangement of the plurality of first battery cells 10 from both sides of the first battery cell assembly 1 in the thickness direction toward the middle of the first battery cell assembly 1 is ...10b, 10a, 10b..., or ...10b, 10a, 10a, 10b..., the free thickness of the first elastic buffer pad in the first battery cell 10b may be less than the free thickness of the first elastic buffer pad in the first battery cell 10a. As a specific example, when the arrangement of the plurality of first battery cells 10 from both sides of the first battery cell assembly 1 in the thickness direction toward the middle of the first battery cell assembly 1 is ...10c, 10b, 10a, 10b, 10c..., the free thickness of the first elastic buffer pad in the first battery cell 10a, the free thickness of the first elastic buffer pad in the first battery cell 10b, and the free thickness of the first elastic buffer pad in the first battery cell 10c gradually decrease. In the battery, in the thickness direction of the battery cells, the battery cells closer to the middle of the battery are often the parts that experience the most severe expansion and the greatest expansion force during use, and in the direction away from the middle of the battery, the expansion thickness and expansion force of the battery cells gradually decrease. By making the free thicknesses of the first elastic buffer pads 130 in different first battery cells 10 gradually decrease from the middle of the first battery cell assembly 1 toward both sides in the thickness direction of the first battery cell assembly 1, it can effectively suppress the volume expansion of each battery cell in the first battery cell assembly 1, while further reducing the potential negative impact of the first elastic buffer pad on the energy density of the battery cell and the battery.

By controlling the free thicknesses of the first elastic buffer pads in different first battery cells in the first battery cell assembly to satisfy the given conditions, it can maintain the volume stability of the first battery cell and the battery, reducing the volume expansion and expansion force of the first battery cell during battery use, while further balancing the high energy density of the battery.

In some embodiments of the present application, in the thickness direction of the first battery cell assembly 1, among two adjacent first battery cells 10, the free thickness of the first elastic buffer pad 130 in the first battery cell 10 closer to the second battery cell 20 is 80% to 100% of the free thickness of the first elastic buffer pad 130 in the first battery cell 10 farther from the second battery cell 20, optionally 90% to 95%.

For example, in the thickness direction of the first battery cell assembly 1, among two adjacent first battery cells 10, the free thickness of the first elastic buffer pad 130 in the first battery cell 10 closer to the second battery cell 20 may be 80%, 84%, 88%, 92%, 96%, 100%, and the like, of the free thickness of the first elastic buffer pad 130 in the first battery cell 10 farther from the second battery cell 20, or may be a range composed of any of the above values. Referring to FIG. 2, as a specific example, when the first battery cell assembly 1 includes a plurality of first battery cells 10 arranged along its thickness direction, assuming the arrangement of the plurality of first battery cells 10 from both sides of the first battery cell assembly 1 in the thickness direction toward the middle of the first battery cell assembly 1 is ...10c, 10b, 10a, 10b, 10c..., or ...10c, 10b, 10a, 10a, 10b, 10c..., taking two adjacent first battery cells 10a and 10b as an example, in the thickness direction of the first battery cell assembly 1, the first battery cell 10b is closer to the second battery cell, and the first battery cell 10a is farther from the second battery cell, the free thickness of the first elastic buffer pad in the first battery cell 10b may be 80% to 100% of the free thickness of the first elastic buffer pad in the first battery cell 10a, optionally 90% to 95%. Controlling the free thicknesses of the first elastic buffer pads in two adjacent first battery cells in the thickness direction of the first battery cell assembly to satisfy the given conditions can reduce the risk of individual first elastic buffer pads in certain first battery cells being unable to sufficiently suppress the volume expansion of the battery cell.

By controlling the free thicknesses of the first elastic buffer pads in two adjacent first battery cells in the thickness direction of the first battery cell assembly to satisfy the given conditions, it is conducive to maintaining the volume stability of the first battery cell and the battery, reducing the volume expansion and expansion force of the first battery cell during battery use, while further balancing the high energy density of the battery.

In some embodiments of the present application, a difference between a thickness of the first battery cell 10 and a thickness of the second battery cell 20 may be less than or equal to a sum of free thicknesses of all the first elastic buffer pads 130 in a single first battery cell 10.

In the battery, the electrode assemblies and the number of electrode assemblies in the first battery cell 10 and the second battery cell 20 may be the same, with the difference being only whether the first elastic buffer pad is provided and the thickness of the battery cell. Let the thickness of the first battery cell 10 be d₁₀, the thickness of the second battery cell 20 be d₂₀, and the sum of the free thicknesses of all the first elastic buffer pads 130 in a single first battery cell 10 be d₁₃₀, then d₁₀ - d₂₀ ≤ d₁₃₀. Satisfying the given conditions is conducive to balancing the high energy density of the battery, while also facilitating the use of the elastic buffer pad to further restrict the movement of the electrode assemblies in the first battery cell, suppressing their shaking and improving the stability of the battery cell.

By controlling the thicknesses of the first battery cell, the second battery cell, and the first elastic buffer pad to satisfy the given conditions, it can further improve the stability of the battery while balancing the high energy density of the battery.

In some embodiments of the present application, in the thickness direction of the first battery cell assembly 1, at least one of the following may be provided with a second elastic buffer pad (not shown) and/or a thermal insulation pad (not shown): between two adjacent first battery cells 10, between two adjacent second battery cells 20, or between the first battery cell 10 and the second battery cell 20.

Specifically, in the thickness direction of the first battery cell assembly 1, the second elastic buffer pad and/or the thermal insulation pad may be sandwiched between two adjacent battery cells, for example, at least one of the second elastic buffer pad and the thermal insulation pad may be sandwiched between two adjacent battery cells; for another example, the second elastic buffer pad may be sandwiched only between two adjacent first battery cells 10; for yet another example, the thermal insulation pad may be sandwiched between any two adjacent battery cells. The provision of the second elastic buffer pad can cooperate with the first elastic buffer pad to better suppress the volume expansion of the battery cell and the battery; the provision of the thermal insulation pad can insulate heat conduction between battery cells, preventing the failure of one battery cell from causing the failure of other battery cells.

By further providing the second elastic buffer pad, it is conducive to further reducing the expansion force of the battery cells in the middle of the battery, improving the volume stability of the battery, and alleviating the issue of stress concentration in the middle battery cells caused by volume expansion in the later stages of battery use, which may lead to lithium precipitation and capacity plunge in the middle battery cells; by further providing the thermal insulation pad, it is conducive to reducing the probability of simultaneous failure of multiple battery cells in the battery.

In some embodiments of the present application, in the thickness direction of the first battery cell assembly 1, at least one of the following may be provided with two layers of the second elastic buffer pad and one layer of the thermal insulation pad, the thermal insulation pad being sandwiched between the two layers of the second elastic buffer pad: between two adjacent first battery cells 10, between two adjacent second battery cells 20, or between the first battery cell 10 and the second battery cell 20.

When both the second elastic buffer pad and the thermal insulation pad are provided between two adjacent battery cells, the number of layers of each is not particularly limited; for example, one layer of the second elastic buffer pad and one layer of the thermal insulation pad may be provided, arranged in a stacked manner; for another example, one layer of the second elastic buffer pad and two layers of the thermal insulation pad may be provided, with the second elastic buffer pad sandwiched between the two layers of the thermal insulation pad; for yet another example, two layers of the second elastic buffer pad and one layer of the thermal insulation pad may be provided, with the thermal insulation pad sandwiched between the two layers of the second elastic buffer pad. Adopting this approach can both insulate heat conduction between battery cells and further enhance the suppression effect on the expansion of the battery cells.

By arranging the second elastic buffer pad and the thermal insulation pad to satisfy the given conditions, it is conducive to reducing the probability of simultaneous failure of multiple battery cells in the battery, while also further improving the volume stability of the battery, reducing the probability of stress concentration in the middle battery cells caused by volume expansion in the later stages of battery use, which may lead to lithium precipitation and capacity plunge.

In some embodiments of the present application, in the thickness direction of the first battery cell assembly 1, a free thickness of the second elastic buffer pad may gradually decrease from the middle of the first battery cell assembly 1 toward both sides.

The free thickness of the second elastic buffer pad is its thickness when not subjected to external force. Arranging the thickness of the second elastic buffer pad to satisfy the given conditions is conducive to further suppressing the volume expansion of each battery cell assembly, reducing the expansion force, while also reducing the potential negative impact of the second elastic buffer pad on the energy density of the battery.

By controlling the free thickness of the second elastic buffer pad in the battery to satisfy the given conditions, it can balance the energy density of the battery while maintaining the volume stability of each battery cell and the battery.

In some embodiments of the present application, the second elastic buffer pad may be the same as the first elastic buffer pad 130.

The second elastic buffer pad may include only an elastic buffer layer or may include both an elastic buffer layer and a support layer. Optionally, the second elastic buffer pad may be the same as the first elastic buffer pad 130, which is conducive to enhancing the reliability of the second elastic buffer pad and facilitating the assembly of the battery.

By making the second elastic buffer pad the same as the first elastic buffer pad 130, it is conducive to improving the uniformity and reliability of the battery structure.

In some embodiments of the present application, in the thickness direction of the first battery cell assembly 1, among two adjacent second elastic buffer pads, a free thickness of the second elastic buffer pad farther from the first battery cell 10 may be 80% to 100% of a free thickness of the second elastic buffer pad closer to the first battery cell 10, optionally 90% to 95%.

Arranging the thickness of the second elastic buffer pad to satisfy the given conditions can reduce the risk of individual elastic buffer pads being unable to sufficiently suppress the volume expansion of the battery cell, while also reducing the potential negative impact of the second elastic buffer pad on the energy density of the battery.

By controlling the free thickness of the second elastic buffer pad to satisfy the given conditions, it is conducive to maintaining the volume stability of the battery cell and the battery, while further balancing the energy density of the battery.

In some embodiments of the present application, the battery 3 may be a battery pack, and in this case, the first battery cell assembly 1 and the second battery cell assembly 2 may first be assembled into one or more battery modules, and then the one or more battery modules may be assembled into a battery pack; alternatively, the first battery cell assembly 1 and the second battery cell assembly 2 may be directly integrated to form a battery pack.

In some embodiments of the present application, the battery pack may further include a battery case. The battery case may include an upper case 4 and a lower case 5, the upper case 4 being capable of covering the lower case 5 to form a sealed space for accommodating battery cells or battery modules.

In some embodiments of the present application, the electrode assembly 120 may include a positive electrode plate, a negative electrode plate, and a separator, the positive electrode plate, the negative electrode plate, and the separator being formed into the electrode assembly through a winding process. During the charging and discharging process of the battery, active ions intercalate and deintercalate back and forth between the positive electrode plate and the negative electrode plate. The separator is disposed between the positive electrode plate and the negative electrode plate to provide isolation.

### [Positive Electrode Plate]

In the battery, the positive electrode plate typically includes a positive electrode current collector and a positive electrode active material layer disposed on the positive electrode current collector, the positive electrode active material layer including a positive electrode active material. The positive electrode current collector may use a conventional metal foil or a composite current collector (for example, a metal material may be disposed on a polymer substrate to form a composite current collector). As an example, the positive electrode current collector may use aluminum foil.

In the present application, the specific type of positive electrode active material is not limited and may use active materials known in the art for battery positive electrodes, which those skilled in the art may flexibly select based on actual needs. For example, the positive electrode active material may include, but is not limited to, lithium transition metal oxides and/or lithium-containing phosphates with an olivine structure. The lithium transition metal oxides may include undoped and/or optionally doped modified lithium transition metal oxides, uncoated and/or coated modified lithium transition metal oxides. The lithium-containing phosphates with an olivine structure may include undoped and/or optionally doped modified lithium-containing phosphates with an olivine structure, uncoated and/or coated modified lithium-containing phosphates with an olivine structure. Positive electrode active materials within the given range may be obtained through preparation or commercial channels.

In some specific embodiments of the present application, the positive electrode active material layer may optionally further include a binder, a conductive agent, and other optional additives. As an example, the conductive agent may include, but is not limited to, one or more of superconducting carbon, acetylene black, carbon black, Ketjen black, carbon dots, carbon nanotubes, Super P (SP), graphene, and carbon nanofibers. As an example, the binder may include, but is not limited to, one or more of styrene-butadiene rubber (SBR), water-based acrylic resin (water-based acrylic resin), polyvinylidene fluoride (PVDF), polytetrafluoroethylene (PTFE), ethylene-vinyl acetate copolymer (EVA), polyacrylic acid (PAA), carboxymethyl cellulose (CMC), polyvinyl alcohol (PVA), and polyvinyl butyral (PVB).

### [Negative Electrode Plate]

In the battery, the negative electrode plate typically includes a negative electrode current collector and a negative electrode active material layer disposed on the negative electrode current collector, the negative electrode active material layer including a negative electrode active material. The negative electrode current collector may use a conventional metal foil or a composite current collector (for example, a metal material may be disposed on a polymer substrate to form a composite current collector). As an example, the negative electrode current collector may use copper foil.

In some embodiments of the present application, the battery cells of the first aspect of the present application may be lithium-ion battery cells, and in this case, the specific type of negative electrode active material is not limited and may use active materials known in the art for battery negative electrodes, which those skilled in the art may flexibly select based on actual needs. As an example, the negative electrode active material may include, but is not limited to, one or more of artificial graphite, natural graphite, hard carbon, soft carbon, silicon-based materials, and tin-based materials. Optionally, the silicon-based materials may include one or more of elemental silicon, silicon-oxygen compounds (for example, silicon monoxide), silicon-carbon composites, silicon-nitrogen composites, and silicon alloys. Further optionally, the tin-based materials may include one or more of elemental tin, tin-oxygen compounds, and tin alloys. Negative electrode active materials within the given range may be obtained through preparation or commercial channels.

In some specific embodiments of the present application, the negative electrode active material layer may optionally further include a binder, a conductive agent, and other optional additives. As an example, the conductive agent may include, but is not limited to, one or more of superconducting carbon, acetylene black, carbon black, Ketjen black, carbon dots, carbon nanotubes, graphene, and carbon nanofibers. As an example, the binder may include, but is not limited to, one or more of styrene-butadiene rubber (SBR), water-based acrylic resin (water-based acrylic resin), polyvinylidene fluoride (PVDF), polytetrafluoroethylene (PTFE), ethylene-vinyl acetate copolymer (EVA), polyvinyl alcohol (PVA), and polyvinyl butyral (PVB). As an example, other optional additives may include, but are not limited to, thickeners and dispersants (for example, sodium carboxymethyl cellulose CMC-Na), and PTC thermistor materials.

In some embodiments of the present application, the separator in the battery may include, but is not limited to, a polyethylene porous membrane, a polypropylene porous membrane, a polyimide porous membrane, and a porous membrane formed by a composite of multiple polymers.

Additionally, the present application provides an electric apparatus, including: the battery according to the first aspect of the present application. The battery may serve as a power source for the electric apparatus or as an energy storage unit for the electric apparatus. The electric apparatus may include, but is not limited to, mobile devices (for example, mobile phones, laptops), electric vehicles (for example, pure electric vehicles, hybrid electric vehicles, plug-in hybrid electric vehicles, electric bicycles, electric scooters, electric golf carts, electric trucks, and the like), electric trains, ships, satellites, and energy storage systems. Referring to FIG. 8, as a specific example, the electric apparatus may be a vehicle. The electric apparatus may select the specific type of battery based on its usage requirements, such as a battery module or a battery pack.

As an example, the electric apparatus may be a pure electric vehicle, a hybrid electric vehicle, or a plug-in hybrid electric vehicle. To meet the high power and high energy density requirements of the electric apparatus for the battery, a battery pack or a battery module may be used.

As another example, the electric apparatus may be a mobile phone, a tablet, or a laptop. Such electric apparatuses typically require lightweight and thin designs, and a single cell may be used as the power source.

The following describes embodiments of the present application. The embodiments described below are exemplary and are used only to explain the present application and should not be construed as limiting the present application. For embodiments where specific techniques or conditions are not specified, they are performed in accordance with techniques or conditions described in the literature in the field or in accordance with product specifications. Reagents or instruments used without specifying the manufacturer are conventional products commercially available.

### Example 1

### (I) Preparation of lithium secondary battery

### (1) Preparation of positive electrode plate

The positive electrode active material LiNi_{0.6}Co_{0.1}Mn_{0.3}O₂, conductive agent Super P, and binder PVDF were mixed at a weight ratio of 93:4:3, solvent N-methylpyrrolidone was added, and the mixture was thoroughly stirred to form a uniform positive electrode slurry. The slurry was then coated on both surfaces of a positive electrode current collector aluminum foil, with a coating thickness of 90 µm on each side of the aluminum foil and a coating areal density of 20 mg/cm² on each side. After drying and cold pressing, a positive electrode plate with a total thickness of 130 µm was obtained.

### (2) Preparation of negative electrode plate

The negative electrode active material artificial graphite, conductive agent Super P, binder styrene-butadiene rubber, and thickener sodium carboxymethyl cellulose were mixed at a weight ratio of 95:1:2:2, solvent deionized water was added, and the mixture was thoroughly stirred to form a uniform negative electrode slurry. The slurry was then coated on both surfaces of a negative electrode current collector copper foil, with a coating thickness of 80 µm on each side of the copper foil and a coating areal density of 11 mg/cm² on each side. After drying and cold pressing, a negative electrode plate with a total thickness of 127 µm was obtained.

### (3) Preparation of electrolyte

In an argon atmosphere glove box with a water content <10 ppm, solvents EC (ethylene carbonate), PC (propylene carbonate), and DMC (dimethyl carbonate) were mixed in a 1:1:1 ratio, and then fully dried lithium salt LiPF₆ was dissolved in the mixed organic solvent. After stirring uniformly, an electrolyte was obtained, with a LiPF₆ concentration of 1 mol/L.

### (4) Preparation of separator

A polyethylene porous membrane was used as the separator.

### (5) Preparation of elastic buffer pad

A polypropylene layer with a free thickness of 2 mm was used as the elastic buffer layer, and a polymethyl methacrylate layer with a thickness of 0.1 mm was used as the support layer. One side of the elastic buffer layer was adhesively bonded to one support layer to obtain an elastic buffer pad with a double-layer structure. The elastic buffer layer had a compression rate of 80% under 1 MPa compressive stress and a compression rate of 90% under 3 MPa compressive stress.

### (6) Preparation of battery pack

The positive electrode plate, separator, and negative electrode plate were stacked in order, with the separator positioned between the positive and negative electrode plates for isolation, and wound to form an electrode assembly.

Two electrode assemblies and an elastic buffer pad were placed in an outer package, with one layer of the elastic buffer pad sandwiched between the two electrode assemblies. The prepared electrolyte was injected, and the package was sealed to obtain a first battery cell with a thickness of 45 mm. The ratio of the total thickness of the electrode assemblies and the elastic buffer pad to the thickness of the inner cavity of the housing was 98%.

Two electrode assemblies were placed in an outer package, the prepared electrolyte was injected, and the package was sealed to obtain a second battery cell with a thickness of 43 mm.

As shown in FIG. 2, 32 first battery cells and 48 second battery cells were directly integrated in an arrangement of 10 rows and 8 columns (with the length direction of the first battery cell (assembly) as the row and the thickness direction of the first battery cell (assembly) as the column), placed in a case, to obtain a battery pack.

### Examples 1 to 5

The differences between Examples 1 to 5 and Example 1 lie in: the relative number of first battery cells and second battery cells, and the arrangement of the first battery cell assembly and the second battery cell assembly, as detailed in Table 1.

### Comparative Examples 1 to 3

Comparative Example 1 differs from Example 1 in that: no second battery cell assembly was provided, as detailed in Table 1.

Comparative Example 2 differs from Example 1 in that: no first battery cell assembly was provided, as detailed in Table 1.

Comparative Example 3 differs from Example 5 in that: the first battery cells were alternately arranged with the second battery cells in the thickness direction, as detailed in Table 1.

### Examples 6 to 10

The differences between Examples 6 to 10 and Example 1 lie in:

The thicknesses of the electrode assemblies and the first battery cells remain unchanged, the ratio of the free thickness of the elastic buffer layer to the thickness of the support layer remains unchanged, and the total thickness of the elastic buffer pad is varied to result in different ratios of the elastic buffer pad thickness to the thickness of a single electrode assembly, as detailed in Table 1.

### Examples 11 to 13

The differences between Examples 11 to 13 and Example 1 lie in:

The thicknesses of the elastic buffer pads in the two rows of first battery cells closer to the second battery cells (understood with reference to the first battery cells in row 10b shown in FIG. 2) and in the two rows of first battery cells closer to the center (understood with reference to the first battery cells in row 10a shown in FIG. 2) are different, and the thicknesses of the second battery cells are different, as detailed in Table 2.

### Examples 14 to 16

The differences between Examples 14 to 16 and Example 1 lie in: in the first battery cell, the thicknesses of the electrode assemblies and the first battery cell remain unchanged, the ratio of the free thickness of the elastic buffer layer to the thickness of the support layer remains unchanged, and the total thickness of the elastic buffer pad is varied, resulting in different ratios of the total thickness of the elastic buffer pad and the single electrode assembly to the thickness of the inner cavity of the housing of the first battery cell, as detailed in Table 3.

### (II) Battery pack testing methods

### (a) Lithium precipitation and capacity plunge test

After resting the lithium-ion battery at 25°C for 5 minutes, it was charged at a constant current of 0.5C to 4.4V, then charged at a constant voltage of 4.4V until the current reached 0.05C, and rested for 5 minutes. The battery pack was then discharged at a constant current of 0.33C to 2.8V and rested for 5 minutes. The above charge-discharge cycle was repeated until a significant capacity decay was observed in the battery pack. After the charge-discharge cycle test, the first battery cells were disassembled to observe whether lithium precipitation occurred on the negative electrode plate.

### (b) Battery cell expansion force test

After resting the lithium-ion battery at 25°C for 5 minutes, it was charged at a constant current of 0.5C to 4.4V, then charged at a constant voltage of 4.4V until the current reached 0.05C, and rested for 5 minutes. The battery pack was then discharged at a constant current of 0.33C to 2.8V and rested for 5 minutes. Pressure sensors were placed on both sides of the battery pack along the thickness direction of the first battery cell assembly, and the above charge-discharge cycle was repeated n times, measuring the expansion force exerted by the battery cell assembly on the battery pack case after n cycles.

### (c) Energy density test of battery pack

After resting the lithium-ion battery at 25°C for 5 minutes, it was charged at a constant current of 0.5C to 4.4V, then charged at a constant voltage of 4.4V until the current reached 0.05C, and rested for 5 minutes. The battery pack was then discharged at a constant current of 0.33C to 2.8V, obtaining a capacity C₀ Ah and an average discharge voltage D₀ V. The total weight of the battery pack was m kg, with n battery cells, and the energy density of the battery pack was calculated as C₀ * D₀ * n / m.

Relevant tests were conducted on Examples 1 to 16 and Comparative Examples 1 to 3, with test results detailed in Tables 1 to 3.

**Table 1: Differences and relevant test results for examples 1 to 10 and comparative example 3**

| | Battery cell arrangement | | Elastic buffer pad to single electrode assembly thickness ratio | First battery cell number proportion | Cycle number corresponding to significant capacity decay | Presence of lithium precipitation at significant capacity decay | Battery cell expansion force on case / kgf | Battery pack energy density / wh/kg |
|---|---|---|---|---|---|---|---|---|
| | First battery cell | Second battery cell | | | | | | |
| Example 1 | 4 rows 8 columns | 3 rows 8 columns on each side of the first battery cell assembly thickness direction | 5% | 40% | 1505 | None | 1511 | 200 |
| Example 2 | 2 rows 8 columns | 4 rows 8 columns on each side of the first battery cell assembly thickness direction | 5% | 20% | 1310 | Slight | 1709 | 205 |
| Example 3 | 6 rows 8 columns | 2 rows 8 columns on each side of the first battery cell assembly thickness direction | 5% | 60% | 1618 | None | 1421 | 195 |
| Example 4 | 8 rows 8 columns | 1 row 8 columns on each side of the first battery cell assembly thickness direction | 5% | 80% | 1720 | None | 1317 | 190 |
| Comparative Example 1 | 10 rows 10 columns | / | 5% | 100% | 1750 | None | 1106 | 180 |
| Comparative Example 2 | / | 10 rows 10 columns | / | 0% | 905 | Severe | 2015 | 210 |
| Comparative Example 3 | 5 rows 5 columns | 5 rows 5 columns, alternately arranged with the first battery cell assembly in the thickness direction | 5% | 50% | 1002 | Severe | 1650 | 198 |
| Example 5 | 5 rows 5 columns | 2 rows 8 columns and 3 rows 8 columns on each side of the first battery cell assembly thickness direction | 5% | 50% | 1551 | None | 1451 | 198 |
| Example 6 | 4 rows 8 columns | 3 rows 8 columns on each side of the first battery cell assembly thickness direction | 3% | 40% | 1453 | None | 1407 | 202 |
| Example 7 | 4 rows 8 columns | 3 rows 8 columns on each side of the first battery cell assembly thickness direction | 6% | 40% | 15504 | None | 1552 | 199 |
| Example 8 | 4 rows 8 columns | 3 rows 8 columns on each side of the first battery cell assembly thickness direction | 8% | 40% | 1545 | None | 1585 | 198 |
| Example 9 | 4 rows 8 columns | 3 rows 8 columns on each side of the first battery cell assembly thickness direction | 10% | 40% | 1495 | None | 1602 | 197 |
| Example 10 | 4 rows 8 columns | 3 rows 8 columns on each side of the first battery cell assembly thickness direction | 15% | 40% | 1389 | None | 1705 | 195 |

**Table 2: Differences and relevant test results for examples 11 to 13 and example 1**

| | Thickness of elastic buffer pad in two rows of first battery cells closer to center (row 10a in FIG. 2) | Thickness of elastic buffer pad in two rows of first battery cells closer to second battery cells (row 10b in FIG. 2) | Thickness ratio of elastic buffer pads in row 10b to row 10a | First battery cell thickness / mm | Second battery cell thickness / mm | Cycle number corresponding to significant capacity decay | Presence of lithium precipitation at significant capacity decay | Battery cell expansion force on case / kgf | Battery pack energy density / wh/kg |
|---|---|---|---|---|---|---|---|---|---|
| Example 1 | 2 mm | 2 mm | 100% | 45 | 43 | 1505 | None | 1511 | 200 |
| Example 11 | 2 mm | 1.8 mm | 90% | 45 | 43 | 1482 | None | 1550 | 201 |
| Example 12 | 2 mm | 1.6 mm | 80% | 45 | 43 | 1463 | None | 1581 | 202 |
| Example 13 | 2 mm | 1.4 mm | 70% | 45 | 43 | 1454 | None | 1597 | 203 |

**Table 3: Differences and relevant test results for examples 13 to 16 and example 1**

| | Ratio of sum of electrode assembly thickness and elastic buffer pad free thickness to housing inner cavity thickness | First battery cell thickness / mm | Second battery cell thickness / mm | Cycle number corresponding to significant capacity decay | Presence of lithium precipitation at significant capacity decay | Battery cell expansion force on case / kgf | Battery pack energy density / wh/kg |
|---|---|---|---|---|---|---|---|
| Example 1 | 98% | 45 | 43 | 1505 | None | 1511 | 200 |
| Example 14 | 96% | 45 | 43 | 1411 | None | 1413 | 201 |
| Example 15 | 100% | 45 | 43 | 1623 | None | 1618 | 199 |
| Example 16 | 105% | 45 | 43 | 1412 | None | 1821 | 197 |

### Results and conclusions:

From Examples 1 to 16 and Comparative Examples 1 to 3, it can be seen that arranging first battery cells with elastic buffer pads in the middle of the battery pack along the thickness direction of the battery cells is conducive to improving the cycle performance of the battery cells. As the number of first battery cells arranged in the thickness direction of the battery cells in the battery pack increases, the effect of improving the cycle life and volume expansion of the battery pack also increases. Correspondingly, as the number of first battery cells in the battery pack increases, the energy density of the battery pack decreases, mainly due to the increased mass proportion of the elastic buffer pads. Additionally, compared to alternately arranging first battery cells and second battery cells in the thickness direction of the battery cell, arranging the first battery cells in the middle of the battery pack along their thickness direction is more conducive to improving the cycle life and volume stability of the battery during cycling. Furthermore, symmetrically distributing the second battery cells on both sides of the first battery cell assembly in the thickness direction is also conducive to further improving the cycle performance of the battery pack. From Examples 1 and 11 to 13, it can be seen that in the thickness direction of the battery cells, making the thickness of the elastic buffer pads in the first battery cells decrease from the middle of the battery pack toward both sides is conducive to reducing the negative impact on the energy density of the battery pack while improving the cycle performance of the battery pack. From Examples 1 and 14 to 16, it can be seen that when the thicknesses of the battery cell assembly and the first battery cell remain unchanged, as the ratio of the total thickness of the electrode assemblies and the elastic buffer pad to the thickness of the inner cavity of the housing of the first battery cell increases, the effect of improving the cycle performance of the battery pack first increases and then decreases. The reason for the decrease in the improvement effect on the cycle performance of the battery pack may be that when the thickness of the elastic buffer pad is too large, it may remain in a compressed state for a long time within the battery housing, reducing its ability to absorb the volume expansion of the battery assembly.

Finally, it should be noted that: the above embodiments are only used to illustrate the technical solutions of the present application and are not intended to limit it; although the present application has been described in detail with reference to the foregoing embodiments, those of ordinary skill in the art should understand that: they can still modify the technical solutions described in the foregoing embodiments, or make equivalent replacements for some or all of the technical features; and these modifications or replacements do not make the essence of the corresponding technical solutions depart from the scope of the technical solutions of the embodiments of the present application, and they should all be included within the scope of the claims and specification of the present application. In particular, as long as there is no structural conflict, the technical features mentioned in the various embodiments can be combined in any manner. The present application is not limited to the specific embodiments disclosed herein but includes all technical solutions falling within the scope of the claims.

## Claims

1. A battery comprising:
a first battery cell assembly, the first battery cell assembly comprising at least one first battery cell, and the first battery cell being internally provided with a first elastic buffer pad; and
a second battery cell assembly, the second battery cell assembly comprising at least two second battery cells, and the at least two second battery cells being disposed on both sides of the first battery cell assembly along a thickness direction of the first battery cell assembly, wherein the thickness direction of the first battery cell assembly is consistent with a thickness direction of the first battery cell.

2. The battery according to claim 1, wherein, with a length direction of the first battery cell assembly as a row and the thickness direction of the first battery cell assembly as a column, the battery satisfies at least one of the following conditions:
the first battery cell assembly comprises a plurality of the first battery cells arranged in rows and/or columns; and
the first battery cell assembly is independently provided with a plurality of the second battery cells arranged in rows and/or columns on both sides along the thickness direction of the first battery cell assembly.

3. The battery according to claim 1 or 2, wherein the at least two second battery cells are symmetrically arranged on both sides of the first battery cell assembly along the thickness direction of the first battery cell assembly.

4. The battery according to any one of claims 1 to 3, wherein, based on a total number of the first battery cells and the second battery cells, a proportion of the number of the first battery cells is 30% to 70%.

5. The battery according to any one of claims 1 to 4, wherein the battery satisfies at least one of the following conditions:
the first battery cell comprises a housing, at least one electrode assembly, and at least one first elastic buffer pad, the electrode assembly being disposed within the housing, and in a thickness direction of the electrode assembly, the first elastic buffer pad being disposed between the electrode assembly and the housing, and/or between two adjacent electrode assemblies; and
the first elastic buffer pad comprises an elastic buffer layer and a support layer disposed on at least one side of the elastic buffer layer, the support layer being configured to support the elastic buffer layer.

6. The battery according to claim 5, wherein the battery satisfies at least one of the following conditions:
under a same pressure, a compression rate of the elastic buffer layer is greater than a compression rate of the support layer;
a porosity of the elastic buffer layer is greater than a porosity of the support layer; and
an elastic modulus of the elastic buffer layer is less than an elastic modulus of the support layer.

7. The battery according to claim 5 or 6, wherein the battery satisfies at least one of the following conditions:
the compression rate of the elastic buffer layer under 1 MPa pressure is 50% to 90%, optionally 60% to 80%, and the compression rate of the support layer under 1 MPa pressure is less than or equal to 5%; and
the compression rate of the elastic buffer layer under 3 MPa pressure is 60% to 95%, optionally 80% to 95%, and the compression rate of the support layer under 3 MPa pressure is less than or equal to 8%.

8. The battery according to any one of claims 5 to 7, wherein the battery satisfies at least one of the following two conditions:
the porosity of the elastic buffer layer is 40% to 95%, optionally 55% to 90%, and further optionally 70% to 85%; and
the porosity of the support layer is less than or equal to 5%.

9. The battery according to any one of claims 5 to 8, wherein the elastic buffer layer comprises at least one of foamed polyethylene, polypropylene, polyurethane, or silicone rubber; and/or the support layer comprises at least one of high-density polyethylene, polymethyl methacrylate, polyethylene terephthalate, or polytetrafluoroethylene.

10. The battery according to any one of claims 5 to 9, wherein the battery satisfies at least one of the following conditions:
in the first battery cell, at least one first elastic buffer pad comprises one elastic buffer layer and one support layer; and
in the first battery cell, at least one first elastic buffer pad comprises one elastic buffer layer and two support layers, the elastic buffer layer being sandwiched between the two support layers.

11. The battery according to any one of claims 5 to 10, wherein a free thickness of the elastic buffer layer is greater than a thickness of the support layer.

12. The battery according to any one of claims 5 to 11, wherein the battery satisfies at least one of the following conditions:
in a single first elastic buffer pad, a ratio of a total thickness of the support layer to the free thickness of the elastic buffer layer is 0.005 to 0.1, optionally 0.02 to 0.05; and
the free thickness of the elastic buffer layer is 0.2 mm to 10 mm, and a thickness of a single support layer is 30 µm to 200 µm.

13. The battery according to any one of claims 5 to 12, wherein a free thickness of a single first elastic buffer pad is 2% to 15% of a thickness of a single electrode assembly, optionally 5% to 10% of the thickness of the single electrode assembly.

14. The battery according to any one of claims 5 to 13, wherein, in the first battery cell, a sum of thicknesses of all the electrode assemblies and free thicknesses of all the first elastic buffer pads is 96% to 105% of a thickness of an inner cavity of the housing, optionally 98% to 103% of the thickness of the inner cavity of the housing.

15. The battery according to any one of claims 5 to 14, wherein the elastic buffer layer is adhesively connected to the support layer.

16. The battery according to any one of claims 5 to 15, wherein an interlayer peel strength between the elastic buffer layer and the support layer is greater than or equal to 10 N/15 mm, optionally greater than or equal to 20 N/15 mm.

17. The battery according to any one of claims 5 to 16, wherein a tensile strength of the support layer is greater than or equal to 20 MPa, optionally greater than or equal to 50 MPa.

18. The battery according to any one of claims 5 to 17, wherein the battery satisfies at least one of the following conditions:
in the first elastic buffer pad disposed between the electrode assembly and the housing, a thermal conductivity of the elastic buffer layer and/or the support layer is greater than or equal to 10 W/(m·°C), optionally greater than or equal to 20 W/(m·°C); and
in the first elastic buffer pad disposed between two adjacent electrode assemblies, the thermal conductivity of the elastic buffer layer and/or the support layer is less than or equal to 0.1 W/(m·°C), optionally less than or equal to 0.05 W/(m·°C).

19. The battery according to any one of claims 5 to 18, wherein the first elastic buffer pad is disposed between two adjacent electrode assemblies.

20. The battery according to any one of claims 5 to 19, wherein, in the thickness direction of the first battery cell assembly, free thicknesses of the first elastic buffer pads in different first battery cells gradually decrease from the middle of the first battery cell assembly toward both sides.

21. The battery according to any one of claims 5 to 20, wherein, in the thickness direction of the first battery cell assembly, among two adjacent first battery cells, the free thickness of the first elastic buffer pad in the first battery cell closer to the second battery cell is 80% to 100% of the free thickness of the first elastic buffer pad in the first battery cell farther from the second battery cell, optionally 90% to 95%.

22. The battery according to any one of claims 1 to 21, wherein a difference between a thickness of the first battery cell and a thickness of the second battery cell is less than or equal to a sum of free thicknesses of all the first elastic buffer pads in a single first battery cell.

23. The battery according to any one of claims 1 to 22, wherein, in the thickness direction of the first battery cell assembly, at least one of the following is provided with a second elastic buffer pad and/or a thermal insulation pad: between two adjacent first battery cells, between two adjacent second battery cells, or between the first battery cell and the second battery cell.

24. The battery according to claim 23, wherein the battery satisfies at least one of the following conditions:
in the thickness direction of the first battery cell assembly, a free thickness of the second elastic buffer pad gradually decreases from the middle of the first battery cell assembly toward both sides;
in the thickness direction of the first battery cell assembly, at least one of the following is provided with two layers of the second elastic buffer pad and one layer of the thermal insulation pad, the thermal insulation pad being sandwiched between the two layers of the second elastic buffer pad: between two adjacent first battery cells, between two adjacent second battery cells, or between the first battery cell and the second battery cell; and
the second elastic buffer pad is the same as the first elastic buffer pad.

25. The battery according to claim 24, wherein, in the thickness direction of the first battery cell assembly, among two adjacent second elastic buffer pads, the free thickness of the second elastic buffer pad farther from the first battery cell is 80% to 100% of the free thickness of the second elastic buffer pad closer to the first battery cell, optionally 90% to 95%.

26. An electric apparatus comprising the battery according to any one of claims 1 to 25.
